# EUROPÄISCHE PATENTANMELDUNG

(11) **EP 3 945 656 A1**
(43) Veröffentlichungstag der Anmeldung: **02.02.2022**
(21) Anmeldenummer: 20188425.1
(22) Anmeldetag: 29.07.2020
(51) Int. Cl.: H02J 3/46

(54) **VERFAHREN ZUM EINSPEISEN ELEKTRISCHER LEISTUNG MITTELS EINER WINDENERGIEANLAGE**

(71) Anmelder: Wobben Properties GmbH, 26607 Aurich (DE)
(72) Erfinder: Brombach, Johannes, 13437 Berlin (DE); Fredewess, Tobias, 26605 Aurich (DE)
(74) Vertreter: Eisenführ Speiser

(57) **Zusammenfassung**

Die Erfindung betrifft ein Verfahren zum Einspeisen elektrischer Leistung in ein elektrisches Versorgungsnetz (250) mittels einer wechselrichtergesteuerten Einspeiseeinheit (105, 200), insbesondere einer Windenergieanlage (100) oder eines Speichersystems, wobei die wechselrichtergesteuerte Einspeiseeinheit (105, 200) eine Wechselrichteranordnung mit mehreren Wechselrichtern (201-203) aufweist, um eine Abgabeleistung zu erzeugen und als elektrische Leistung in das elektrische Versorgungsnetz (250) einzuspeisen, jedem Wechselrichter (201-203) ein Trennschalter (221-223) zugeordnet ist, um den jeweiligen Wechselrichter (201-203) galvanisch vom elektrischen Versorgungsnetz zu (250) trennen, jeder Wechselrichter (201-203) eine Schaltungsanordnung (260) aus Halbleiterschaltern (261, 262) aufweist, um über eine gepulste Ansteuerung der Schaltungsanordnung (260) einen möglichst sinusförmigen Ausgangsstrom zu erzeugen, und jeder Wechselrichter (201-203) dazu vorbereitet ist, jeweils eine variable Teilleistung zu erzeugen, und wobei die Abgabeleistung sich als Summe aller erzeugten Teilleistungen ergibt, wobei in Abhängigkeit von einer Höhe der Abgabeleistung, einer oder mehrere der Wechselrichter (201-203) als aktive Wechselrichter betrieben werden, wobei jeder aktive Wechselrichter jeweils eine Teilleistung erzeugt, und die übrigen Wechselrichter als passive Wechselrichter betrieben werden, wobei jeder passive Wechselrichter keine Teilleistung erzeugt, wobei einer oder mehrere der passiven Wechselrichter als blockierte Wechselrichter betrieben werden und galvanisch mit dem elektrischen Versorgungsnetz (250) verbunden bleiben.

## Beschreibung

Die vorliegende Erfindung betrifft ein Verfahren zum Einspeisen elektrischer Leistung in ein elektrisches Versorgungsnetz mittels einer wechselrichtergesteuerten Einspeiseeinheit, insbesondere mittels einer Windenergieanlage oder eines Speichersystems. Außerdem betrifft die vorliegende Erfindung eine wechselrichtergesteuerte Einspeiseeinheit, insbesondere eine Windenergieanlage oder ein Speichersystem.

Windenergieanlage sind bekannt, sie erzeugen elektrische Leistung aus Wind und speisen diese in ein elektrisches Versorgungsnetz ein. Moderne Windenergieanlagen verwenden dafür mehrere parallel geschaltete Wechselrichter. Je nach Nennleistung der Windenergieanlage können dafür typischerweise 15 Wechselrichter parallelgeschaltet sein, oder auch mehr. Wird die Windenergieanlage allerdings mit weniger als Nennleistung betrieben, besonders dann, wenn die Windgeschwindigkeit unterhalb einer Nennwindgeschwindigkeit ist, werden nicht alle Wechselrichter benötigt.

Werden bei einem solchen Betrieb und von Nennleistung der Windenergieanlage dennoch alle Wechselrichter verwendet, aber mit entsprechend reduzierter Leistung, arbeiten sie weniger effizient. Zur Erhöhung der Effizienz kann dann vorgesehen sein, dass nur einige der Wechselrichter arbeiten, nämlich möglichst jeweils mit Nennleistung. Die übrigen Wechselrichter können solange abgeschaltet sein. Erzeugt die Windenergieanlage also beispielsweise eine Abgabeleistung in der Höhe der Hälfte der Nennleistung, so kann vorgesehen sein, dass nur die Hälfte der Wechselrichter in Betrieb sind.

Durch eine solche Maßnahme kann zwar die Effizienz erhöht werden, die Windenergieanlage kann dann aber in einem solchen reduzierten Betrieb Einbußen bei möglichen Aufgaben einer Netzstützung des elektrischen Versorgungsnetzes aufweisen. Eine solche Aufgabe der Netzstützung kann das Einspeisen von Blindleistung sein, besonders im Falle eines Netzfehlers, also insbesondere bei einem Spannungseinbruch. Das Einspeisen von Blindleistung hängt nur wenig von der verfügbaren Wirkleistung ab, also nur wenig von der verfügbaren Windleistung ab. Dadurch, dass aber nur einige von dem Wechselrichter betrieben werden, wird somit auch die einspeisbare Blindleistung entsprechend reduziert. Wenn alle Wechselrichter in Betrieb sind, könnte ein Blindstrom in Höhe eines Nennstroms der Windenergieanlage eingespeist werden. Sind nicht alle Wechselrichter in Betrieb, verringert sich dieser einspeisbare Blindstrom entsprechend.

Somit ergibt sich das Dilemma, dass bei Betrieb mit reduzierter Leistung entweder die Wechselrichter ineffizient betrieben werden, oder ein Maximalwert der möglichen Blindleistungseinspeisung reduziert wird.

Es könnte ein Kompromiss gefunden werden, indem mehr Wechselrichter einspeisen, als nötig, aber auch nicht alle Wechselrichter zum Einspeisen betrieben werden. Die Effizienz der Einspeisung ist dann trotzdem reduziert, wenn auch nicht so stark, während gleichzeitig mehr Blindleistung einspeisbar ist, die technisch mögliche maximale Blindleistungseinspeisung trotzdem nicht erreicht werden kann. Um Abhilfe zu schaffen, können wahlweise alle Wechselrichter betrieben werden, wenn ein Netzstützungsbedarf zu erwarten ist, andernfalls kann die Effizienz im Vordergrund stehen und entsprechend wenige Wechselrichter nur betrieben werden.

Hier liegt aber das Problem zugrunde, dass im Falle eines plötzlichen, unerwarteten Bedarfs an möglichst viel Blindleistungseinspeisung dieser nicht erfüllt werden kann, wenn er nicht vorhersehbar war.

Der vorliegenden Erfindung liegt somit die Aufgabe zugrunde, wenigstens eins der vorstehend genannten Probleme zu adressieren. Insbesondere soll eine Lösung vorgeschlagen werden, bei der eine wechselrichtergesteuerte Einspeiseeinheit, insbesondere eine Windenergieanlage oder ein Speichersystem, möglichst effizient arbeitet und gleichzeitig auch spontan auch möglichst viel Blindleistung einspeisen kann, selbst bei einem Betrieb mit reduzierter Abgabeleistung. Zumindest soll zu bisher bekannten Lösungen, eine alternative Lösung vorgeschlagen werden.

Erfindungsgemäß wird ein Verfahren nach Anspruch 1 vorgeschlagen. Somit wird ein Verfahren zum Einspeisen elektrischer Leistung in ein elektrisches Versorgungsnetz vorgeschlagen. Das erfolgt mit einer wechselrichtergesteuerten Einspeiseeinheit. Insbesondere ist vorgesehen, dass die wechselrichtersteuerte Einspeiseeinheit eine Windenergieanlage ist. Es kommt aber auch ein Speichersystem in Betracht, dass eine hohe Speicherkapazität haben kann und aus dem Speicher bei Bedarf elektrische Leistung in das elektrische Versorgungsnetz einspeisen kann. Somit kann auch ein solches Speichersystem situationsabhängig, besonders in Abhängigkeit von einer Situation des elektrischen Versorgungsnetzes, eine Leistung einspeisen, die unterhalb einer durch dieses Speichersystem einspeisbaren Nennleistung liegt. Nachfolgend werden die erfindungsgemäßen Merkmale und auch Merkmale gemäß weiteren Ausführungsformen je nach zu erläuternden Merkmalen von Windenergieanlagen beschrieben. Diese Beschreibungen sind analog auch als Beschreibungen zu einem Verfahren zum Einspeisen mittels eines Speichersystems zu verstehen und auch für das Speichersystem als solches, auch wenn das nicht ausdrücklich erwähnt ist. Vorsorglich wird darauf hingewiesen, dass auch ein Speichersystem in Abhängigkeit von einer Windgeschwindigkeit gesteuert werden kann, nämlich, um es beispielhaft auszudrücken, um bei einer Flaute fehlende Windleistung zu kompensieren.

Jedenfalls weist die Wechselrichtergesteuerte Einspeiseeinheit eine Wechselrichteranordnung mit mehreren Wechselrichtern auf, um eine Abgabeleistung zu erzeugen und als elektrische Leistung in das elektrische Versorgungsnetz einzuspeisen. Die Wechselrichter sind dabei in einer Parallelschaltung angeordnet. Dadurch addieren sich ihre erzeugten Leistungen auf. Insbesondere addieren sich dafür ihre erzeugten Ausgangsströme auf, die für jeden Wechselrichter auch als Teilausgangsströme bezeichnet werden können.

Weiterhin ist jedem Wechselrichter ein Trennschalter zugeordnet, um den jeweiligen Wechselrichter galvanisch vom elektrischen Versorgungsnetz zu trennen. Ein solcher Trennschalter kann aktiv angesteuert werden, um diese galvanische Trennung vorzunehmen.

Jeder Wechselrichter weist eine Schaltungsanordnung aus Halbleiterschaltern auf, um über eine gepulste Ansteuerung der Schaltungsanordnung einen möglichst sinusförmigen Ausgangsstrom zu erzeugen. Insoweit wird hier besonders ein üblicher Wechselrichter verwendet. Vorzugsweise wird ein Wechselrichter verwendet, der mit einem Toleranzbandverfahren arbeitet. Dadurch kann der Strom, nämlich der Teilstrom jedes Wechselrichters gezielt geregelt werden, weil das Toleranzbandverfahren in jedem Wechselrichter jeweils den erzeugten Teilstrom als Teilausgansstrom erfasst und überprüft, ob dieser in einem vorgegebenen Toleranzband liegt. Abhängig davon werden die Halbleiterschalter angesteuert. Somit kann eine Stromregelung durchgeführt werden und dadurch können die Ströme sehr genau eingestellt werden.

Jeder Wechselrichter ist dazu vorbereitet, jeweils eine variable Teilleistung zu erzeugen, wobei die Abgabeleistung sich als Summe aller Teilleistungen ergibt. Eine Teilleistung ist insbesondere als Wirkleistung zu verstehen. Sie kann aber auch als Blindleistung oder Scheinleistung betrachtet werden.

Dass sich die Abgabeleistung als Summe aller erzeugten Teilleistungen ergibt bedeutet auch, dass die Wechselrichter zueinander parallelgeschaltet sind. Jeder Wechselrichter weist einen Ausgang auf, an dem auch der Teilstrom bereitgestellt wird, und alle diese Ausgänge bzw. Teilausgänge der Wechselrichter sind dann an einem Knoten verbunden, an dem die Teilleistungen bzw. die Teilströme zur Abgabeleistung bzw. einem entsprechenden Abgabestrom aufaddiert werden.

Es wird dann vorgeschlagen, dass in Abhängigkeit von einer Höhe der Abgabeleistung die Wechselrichter unterschiedlich betrieben oder auch nicht betrieben werden können.

Einer oder mehrere der Wechselrichter werden als aktive Wechselrichter betrieben. Jeder aktive Wechselrichter erzeugt jeweils eine Teilleistung. Im Idealfall entspricht die der Nennleistung des Wechselrichters. Sie kann aber auch darunterliegen.

Die übrigen Wechselrichter der Wechselrichteranordnung werden als passive Wechselrichter betrieben. Jeder passive Wechselrichter erzeugt keine Teilleistung. Die passiven Wechselrichter sind also an dem Erzeugen der Abgabeleistung nicht beteiligt. Das schließt aber nicht aus, dass, aus Gründen die teilweise noch beschrieben werden, ein geringer Strom von dem passiven Wechselrichter abgegeben wird oder in den passiven Wechselrichter hineinströmt. Besonders können die passiven Wechselrichter galvanisch mit dem Netz verbunden bleiben, sodass ein kleiner Filterstrom aus dem Netz in den entsprechenden Wechselrichter fließen kann. Es erfolgt aber keine aktive Erzeugung von Leistung, insbesondere keine Wirkleistung. Insbesondere fließt über die Halbleiterschalter der Schaltungsanordnung des passiven Wechselrichters kein Strom.

Es ist nun weiter vorgesehen, dass einer oder mehrere der passiven Wechselrichter als blockierte Wechselrichter betrieben werden und galvanisch mit dem elektrischen Versorgungsnetz verbunden bleiben. Insbesondere bleiben nämlich die vorgenannten Trennschalter geschlossen. Die blockierten Wechselrichter sind insoweit in ihrem Betrieb blockiert aber nicht vom elektrischen Versorgungsnetz getrennt.

Hier wurde besonders erkannt, dass durch das Blockieren einzelner Wechselrichter ebenfalls erreicht werden kann, dass diese keine elektrische Leistung erzeugen, sodass nur die aktiven Wechselrichter Leistung erzeugen und alle aktiven Wechselrichter zusammen die Abgabeleistung erzeugen. Die aktiven Wechselrichter können dadurch effizient betrieben werden.

Gleichzeitig wurde aber erkannt, dass ein solcher blockierter Wechselrichter bei Bedarf sofort das Einspeisen elektrischer Leistung, also das Erzeugen eines entsprechenden Stromes aufnehmen kann. Somit wird erreicht, dass bei Bedarf auch durch die blockierten Wechselrichter Blindleistung bzw. Blindstrom bereitgestellt werden kann, obwohl sie, zumindest bis zu dem Zeitpunkt an der Erzeugung der Abgabeleistung nicht beteiligt waren. In dem Moment in dem ein blockierter Wechselrichter Blindstrom bzw. Blindleistung einspeist, wird seine Blockade natürlich aufgehoben und in dem Moment wechselt er von einem passiven Wechselrichter in einen aktiven Wechselrichter. Dadurch dass er aber bis dahin nur ein blockierter Wechselrichter war, also kein vom elektrischen Versorgungsnetz getrennter Wechselrichter, kann die Aufnahme einer solchen Blindstromerzeugung oder Blindleistungserzeugung praktisch verzögerungsfrei erfolgen. Eine gewisse physikalisch unvermeidbare Verzögerung ist natürlich immer vorhanden, aber diese plötzliche Einspeisung von Blindleistung durch einen bis dahin blockierten Wechselrichter kann genauso schnell aufgenommen werden wie bei einem aktiven Wechselrichter.

Besonders unterscheidet sich diese Lösung von einer bisher bekannten Variante, bei der die Wechselrichter, die zum Erzeugen der Abgabeleistung nicht beitragen sollen, abgeschaltet waren und auch durch Öffnung ihres Trennschalters vom elektrischen Versorgungsnetz galvanisch getrennt waren. Es ist möglich, dass alle passiven Wechselrichter als blockierte Wechselrichter betrieben werden, es kommt aber auch in Betracht, dass einige der passiven Wechselrichter, oder zumindest einer der passiven Wechselrichter anders behandelt wird als ein blockierter Wechselrichter, was unten noch beschrieben werden wird.

Gemäß einer Ausführungsform wird vorgeschlagen, dass jeder blockierte Wechselrichter dadurch keine Teilleistung erzeugt, dass die gepulste Ansteuerung unterdrückt wird, und jeder blockierte Wechselrichter auf ein auslösendes Signal hin verzögerungsfrei das unterdrücken der gepulsten Ansteuerung beendet und eine Teilleistung erzeugt. Es brauchen also keine Zeitaufwendigen Schritte unternommen zu werden, um bei Bedarf auch mit einem blockierten Wechselrichter sofort eine Teilleistung zu erzeugen. Das wird dadurch erreicht, dass auf das auslösende Signal hin die gepulste Ansteuerung sofort aufgenommen wird.

Das wird besonders dadurch erreicht, dass sich der blockierte Wechselrichter von einem aktiven Wechselrichter im Wesentlichen nur dadurch unterscheidet, dass die gepulste Ansteuerung blockiert ist. Eine solche Blockierung wird insbesondere in einer Software realisiert, die erreicht, dass den blockierten Wechselrichter keinerlei Steuerimpulse erreichen. Genauso kann aber diese Veränderung durch Software sofort aufgehoben werden, sodass entsprechende Steuersignale den blockierten Wechselrichter dann erreichen können. In dem Moment ist der blockierte Wechselrichter dann natürlich kein blockierter Wechselrichter mehr.

Besonders kann der blockierte Wechselrichter einen Gleichspannungszwischenkreis mit betriebsfertiger Zwischenkreisspannung aufweisen, also mit einer Zwischenkreisspannung, die der Höhe der Zwischenkreisspannung der aktiven Wechselrichter entspricht. Wird dann die gepulste Ansteuerung aufgenommen, kann auch sofort eine Teilleistung erzeugt werden.

Ein auslösendes Signal hierfür kann ein ausdrückliches Signal sein, dass beispielsweise ein Netzbetreiber überträgt. Es kann auch ein Signal sein, dass in dem Wechselrichter oder der Wechselrichteranordnung erzeugt wird. beispielsweise kann ein Spannungsabfall oder ein Spannungsanstieg der Netzspannung bzw. an entsprechenden Ausgangsklemmen des Wechselrichters dazu führen, dass der Wechselrichter oder die Wechselrichteranordnung ein solches auslösendes Signal erzeugen.

Das Unterdrücken der gepulsten Ansteuerung wird dann verzögerungsfrei beendet. Das auslösende Signal führt dann unmittelbar zum Aufnehmen der gepulsten Ansteuerung, also ohne Verzögerung. Natürlich liegen auch hier physikalische Laufzeiten vor, die ein Ansteuerungssignal benötigt, um von einer Steuereinrichtung des Wechselrichters zur Schaltungsanordnung desselben Wechselrichters zu gelangen. Auch benötigen selbst Halbleiterschalter der Schaltungsanordnung gewisse Mindestzeiten, um die Schaltung auszuführen. Aber all dies sind Zeiten, die auch bei den aktiven Wechselrichtern auftreten und insoweit ist jedenfalls das verzögerungsfreie Beenden des Unterdrückens der gepulsten Ansteuerung nicht gegenüber einem gepulsten Ansteuern eines aktiven Wechselrichters verzögert. Solche theoretisch beschreibbaren Verzögerungszeiten sind insoweit vernachlässigbar und liegen insbesondere in ihrem Wert maximal bei einigen ms, sind zumindest kleiner als 10 ms. In dem Fall sind diese Zeiten vernachlässigbar und solche kleinen Zeiten sind hier auch als verzögerungsfrei zu verstehen.

Wenn jeder blockierte Wechselrichter dadurch keine Teilleistung erzeugt, dass die gepulste Ansteuerung unterdrückt wird, kann der blockierte Wechselrichter außerdem oder alternativ in einem Bereitschaftsmodus betrieben werden. In diesem Bereitschaftsmodus weist er eine volle Funktionsfähigkeit eines aktiven Wechselrichters auf, mit dem Unterschied, also der Ausnahme, dass die gepulste Ansteuerung unterdrückt wird. Mit anderen Worten, ist demnach insbesondere ein blockierter Wechselrichter, ein aktiver Wechselrichter, der allerdings nicht angesteuert wird. Entsprechend ist eine Aktivierung eines blockierten Wechselrichters ohne weiteres dadurch möglich, dass er angesteuert wird. Dann ändert er seine Funktionalität von der eines blockierten Wechselrichter in die eines aktiven Wechselrichters. Dieser Vorgang ist dann nur das Vornehmen einer Ansteuerung der Schaltungsanordnung des betreffenden Wechselrichters. Dadurch ändert er seine Funktion von der eines blockierten Wechselrichters in die eines aktiven Wechselrichters.

Gemäß einer Ausführungsform wird vorgeschlagen, dass die Windenergie durch eine Maximalleistung als Obergrenze für die Abgabeleistung gekennzeichnet ist, und alle Wechselrichter als aktive Wechselrichter betrieben werden und jeweils eine Teilleistung erzeugen, wenn die Abgabeleistung die Maximalleistung erreicht hat und einer oder mehrere der Wechselrichter als passive Wechselrichter betrieben werden und keine Teilleistung erzeugen, wenn die Abgabeleistung wenigstens um einen vorbestimmbaren Leistungsabstand unterhalb der Maximalleistung liegt.

Wenn die Windenergieanlage voll ausgelastet ist, werden alle Wechselrichter als aktive Wechselrichter betrieben. Alle Wechselrichter erzeugen also eine Teilleistung als Beitrag für die Abgabeleistung. Die Maximalleistung kann insbesondere eine Nennleistung der Windenergieanlage sein. Liegt die Abgabeleistung aber wenigstens um einen vorbestimmbaren Leistungsabstand unterhalb der Maximalleistung, werden nicht alle Wechselrichter als aktive Wechselrichter betrieben. Stattdessen wird wenigstens ein Wechselrichter als passiver Wechselrichter betrieben, insbesondere als blockierter Wechselrichter. Der Leistungsabstand ist insbesondere so groß oder wenigstens so groß wie eine Nennleistung eines Wechselrichters. Die Nennleistung eines Wechselrichters ist insoweit eine Teilleistung oder Teilnennleistung des Wechselrichters.

Die Maximalleistung, die Abgabeleistung und der Leistungsabstand können als Scheinleistung, Wirkleistung oder Blindleistung überprüft werden. Insoweit kann dort jeweils der Leistungsbegriff als Scheinleistung, Wirkleistung oder Blindleistung verstanden werden. Die Überprüfung kann durch Überprüfung eines Einspeisescheinstromes, eines Einspeisewirkstromes bzw. eines Einspeiseblindstroms durchgeführt werden. Diese Art der Überprüfung hängt somit davon ab, ob Scheinleistung, Wirkleistung oder Blindleistung betrachtet wird.

Besonders die Überprüfung der Scheinleistung bzw. des Scheinstroms ist sinnvoll, weil hierdurch die Strombelastung berücksichtigt wird, die im Wesentlichen von der Phasenlage unabhängig ist. Durch die Überprüfung der Wirkleistung bzw. des Wirkstroms können besonders die Leistungsfähigkeit des jeweiligen Wechselrichters berücksichtigt werden. Die Betrachtung der Blindleistung oder des Blindstroms kann ebenfalls sinnvoll sein, um besonders für eine Stützfähigkeit durch Blindleistungseinspeisung ein Kriterium zu berücksichtigen.

Gemäß einer Ausführungsform wird vorgeschlagen, dass ein passiver Wechselrichter oder mehrere passive Wechselrichter als blockierte Wechselrichter betrieben werden und galvanisch mit dem elektrischen Versorgungsnetz verbunden bleiben, und ein weiterer passiver Wechselrichter oder mehrere weitere der passiven Wechselrichter als getrennte Wechselrichter betrieben werden und jeweils durch ihre Trennschalter galvanisch vom elektrischen Versorgungsnetz getrennt werden.

Die passiven Wechselrichter können somit unterschieden werden bzw. unterschiedlich betrieben werden. Eine Variante ist, dass sie als blockierte Wechselrichter betrieben werden. Dann arbeiten sie insbesondere wie ein aktiver Wechselrichter, wobei aber die Ansteuerung unterdrückt wird.

Die andere Variante ist, dass sie als getrennte Wechselrichter betrieben werden. Dann werden sie tatsächlich galvanisch vom elektrischen Versorgungsnetz getrennt, nämlich durch Öffnen ihrer Trennschalter.

Hier wurde besonders erkannt, dass es nicht notwendig sein muss, alle passiven Wechselrichter als blockierte Wechselrichter zu betreiben. Besonders ist der Vorteil der blockierten Wechselrichter, dass sie sich sofort wieder an einer Leistungseinspeisung beteiligen können. Das ist mit den getrennten Wechselrichtern nicht möglich, zumindest nicht so schnell möglich. Dafür kann es Vorteile haben, dass ein passiver Wechselrichter auch galvanisch vom Netz getrennt ist. Bspw. werden bei einem getrennten Wechselrichter Kriechströme oder Kreisströme vermieden und durch den geöffneten Trennschalter ergibt sich auch ein Schutz gegen Überspannungen im elektrischen Versorgungsnetz und eine zusätzliche Reduzierung der Verluste durch die Ströme in den Netzfilter. Somit wurde erkannt, dass in vorteilhafter Weise eine Mischung vorgesehen ist, demnach einige passive Wechselrichter als blockierte Wechselrichter betrieben werden und andere als getrennte Wechselrichter.

Besonders kann vorgesehen sein, dass in Abhängigkeit von einer Schwankungsbreite der erzeugten Windleistung wenigstens so viele passive Wechselrichter als blockierte Wechselrichter betrieben werden, wie notwendig wäre, um Leistung in der Höhe der Schwankungsbreite zu erzeugen. Hier wurde nämlich erkannt, dass ein Wechselrichter schnell seine Betriebsart zwischen der Betriebsart des aktiven Wechselrichters und der Betriebsart des blockierten Wechselrichters tauschen kann. Somit kann erreicht werden, dass nur genauso viele Wechselrichter als aktive Wechselrichter betrieben werden, wie zum Einspeisen der aktuellen Leistung erforderlich ist, ohne dass für die Schwankungsbreite eine Reserve vorgehalten werden muss. Würde eine solche Reserve erforderlich werden, könnte sofort ein blockierter Wechselrichter oder mehrere blockierte Wechselrichter, diese Aufgabe übernehmen.

Gleichzeitig kann es ungünstig sein, alle passiven Wechselrichter als blockierte Wechselrichter zu betreiben, denn ein getrennter Wechselrichter kann durch seine galvanische Trennung vom elektrischen Versorgungsnetz Vorteile haben, insbesondere Kriechströme oder Kreisströme vermeiden. Daher wird vorgeschlagen, einige Wechselrichter als getrennte Wechselrichter zu betreiben.

Optional ist für jeden Wechselrichter eine Filterschaltung vorgesehen, um einen vom Wechselrichter erzeugten Ausgangsstrom zu filtern, und diese Filterschaltung wird bei den getrennten Wechselrichtern jeweils durch den Trennschalter des betreffenden Wechselrichters auch galvanisch vom elektrischen Versorgungsnetz getrennt. Hier wurde besonders erkannt, dass trotz Blockierung eines Wechselrichters ein Strom durch diese Filterschaltung fließen kann. Dadurch ist der Trennschalter so angeordnet, dass er auch diese Filterschaltung galvanisch vom elektrischen Versorgungsnetz trennt. Damit werden entsprechende Ströme ausgeschlossen. Dadurch kann es für einige passive Wechselrichter vorteilhaft sein, diese als getrennte Wechselrichter zu betreiben, sodass auch kein Filterstrom zum oder vom Netz fließt. Etwaige Leistungsschwankungen können durch einige blockierte Wechselrichter berücksichtigt werden, sodass dadurch vermieden wird, dass getrennte Wechselrichter häufig doch wieder zugeschaltet und als aktive Wechselrichter betrieben werden müssen.

Gemäß einer Ausführungsform wird vorgeschlagen, dass eine Auswahl der Wechselrichter als aktive Wechselrichter oder als passive Wechselrichter und/oder eine Auswahl der passiven Wechselrichter als blockierte Wechselrichter oder getrennte Wechselrichter in Abhängigkeit von wenigstens einem der folgenden Kriterien erfolgt.

Jede der beiden Auswahlen kann in Abhängigkeit von einer Größe eines einzuspeisenden Scheinstroms erfolgen, in Abhängigkeit von einer Größe eines einzuspeisenden Wirkstroms, oder in Abhängigkeit von einer Größe eines einzuspeisenden Blindstroms. Diese Abhängigkeiten können auch zugleich geprüft werden, vorzugsweise wird hiervon aber nur eine Größe überprüft. Dadurch kann insbesondere eine Überprüfung der Scheinleistung, der Wirkleistung bzw. der Blindleistung erfolgen. Dies wurde oben bereits erläutert, einschließlich der Vorteile.

Jede der beiden Auswahlen kann auch in Abhängigkeit von wenigstens einem erfassten Verlust der Wechselrichteranordnung erfolgen. Hier kann besonders ein Vergleich zwischen erzeugter und abgegebener Wirkleistung vorgenommen werden. Durch Wechsel eines Wechselrichters in seiner Betriebsart verändert sich dieser Verlust und das kann als Auswahlkriterium berücksichtig oder mitberücksichtigt werden.

Weiterhin kommt in Betracht, dass eine der Auswahlen, oder beide, in Abhängigkeit einer erfassten Temperatur der Wechselrichteranordnung erfolgt und außerdem oder alternativ in Abhängigkeit einer Zwischenkreisspannung eines gemeinsamen Gleichspannungszwischenkreises der Wechselrichteranordnung erfolgt und außerdem oder alternativ in Abhängigkeit von einer Netzspannung des elektrischen Versorgungsnetzes erfolgt.

Besonders wird vorgeschlagen, die Überprüfung zumindest eines Stromes bzw. einer Leistung durch eines dieser letztgenannten Kriterien zu ergänzen. Zusätzlich zur Überwachung einer Leistung oder eines Stromes kann somit die erfasste Temperatur der Wechselrichteranordnung berücksichtigt werden. Hierdurch kann allein oder zusätzlich eine Belastung der Wechselrichteranordnung erkannt werden. Insbesondere ist vorgesehen, dass die Temperaturmessung an einem Wechselrichter erfolgt, der als aktiver Wechselrichter betrieben wird. Hier kann besonders durch die Betrachtung der Abgabeleistung bzw. eines entsprechenden Stroms eine erste Vorauswahl getroffen werden. Durch die Überwachung wenigstens einer erfassten Temperatur kann dann ggf. nachjustiert werden. Besonders dann, wenn die erfasste Temperatur hoch ist, kann das auf eine sehr starke Belastung der aktiven Wechselrichter hindeuten und dann kann vorgesehen sein, wenigstens einen der passiven Wechselrichter als aktiven Wechselrichter zu betreiben, um die aktiven Wechselrichter zu entlasten. Genauso kann auch eine sehr niedrige Temperatur dazu führen, dass erkannt wird, dass die aktiven Wechselrichter eher schwach belastet sind und zur Steigerung der Effizienz ein aktiver Wechselrichter, oder mehrere aktive Wechselrichter ihren Betrieb wechseln und als passive Wechselrichter betrieben werden.

Über eine Zwischenkreisspannung kann besonders eine plötzliche Leistungserhöhung der Windenergieanlage erkannt werden, besonders nämlich bei Zunahme des Windes. Darauf kann dann sofort darauf reagiert werden, in dem wenigstens ein passiver Wechselrichter, insbesondere blockierter Wechselrichter, als aktiver Wechselrichter betrieben wird und dadurch beim Erkennen der ansteigenden Leistung sich beim Erzeugen der Abgabeleistung beteiligen kann.

Auch diese beiden Kriterien, also die Überwachung der Temperatur einerseits und die Überwachung der Zwischenkreisspannung andererseits, können in vorteilhafter Weise kombiniert werden. Durch die Temperaturüberwachung kann eine tatsächliche Belastung erkannt werden, während durch die Überwachung der Zwischenkreisspannung eine schnelle Leistungsänderung erkannt wird. Durch die Überwachung der Zwischenkreisspannung kann natürlich auch eine abfallende Leistung erkannt werden und in Abhängigkeit davon, wenigstens einen aktiven Wechselrichter als passiven Wechselrichter zu betreiben.

Es wurde besonders erkannt, dass die Temperatur, besonders der Schaltungsanordnung, den Wirkungsgrad beeinflusst. Eine zu heiße oder zu kalte Schaltungsanordnung arbeitet weniger effizient, hat also einen schlechteren Wirkungsgrad, als in einem mittleren Temperaturbereich. Ähnliches gilt für die Zwischenkreisspannung. Ist sie zu gering, ist die Ausgangsspannung schwer zu erreichen. Ist sie zu hoch, führt das zu schnellen Schalthandlungen, jedenfalls, wenn ein Toleranzbandverfahren verwendet wird, was hier bevorzugt vorgeschlagen wird. Aus der Temperatur und der Zwischenkreisspannung kann sich somit eine tatsächliche Wirkungsgradkurve ableiten lassen, welche sich zumindest leicht von einer statischen, vorberechneten Wirkungsgradkurve unterscheiden kann, die besonders einen Zusammenhang des Wirkungsgrades von der erzeugten Leistung angibt. Zumindest kann eine solche statische, vorberechnete Wirkungsgradkurve durch Berücksichtigung der Temperatur und ZK-Spannung verbessert werden, insbesondere auch im Betrieb angepasst werden. Die Temperatur und die Zwischenkreisspannung wirken sich also auf den Wirkungsgrad aus und das kann berücksichtigt werden. Dadurch können sich auch Synergieeffekte ergeben, wenn die Temperatur und die Zwischenkreisspannung zugleich berücksichtigt werden.

Eine Auswahl in Abhängigkeit von einer Netzspannung des elektrischen Versorgungsnetzes kann besonders getroffen werden, um einen Bedarf einer Stützleistung zu erfüllen. Anhand der Netzspannung kann ein solcher Bedarf erkannt werden, besonders der Bedarf an einer zu stützenden Blindleistung.

Hier kommen besonders zwei Varianten in Betracht, nämlich ein Bedarf an einer unmittelbaren Stützleistung und ein Bedarf an einer zu erwartenden oder potentiell zu erwartenden Stützleistung. Das Abfallen der Netzspannung unter einen Stützgrenzwert kann einen unmittelbaren Bedarf an einer Stützleistung anzeigen. In diesen Fall sollte sofort Blindleistung eingespeist werden und dafür können blockierte Wechselrichter ihren Betriebsmodus so wechseln, dass sie zu aktiven Wechselrichtern werden. Je nach Stützleistungsbedarf kann dies unterschiedlich viele passive Wechselrichter betreffen.

Ein zu erwartender Bedarf oder potentiell zu erwartender Bedarf an einer Stützleistung kann beispielsweise durch Schwankungen der Netzspannung in einem elektrischen Versorgungsnetz erkannt werden. Auch Schwankungen der Frequenz kommen hier in Betracht. Liegen also solche Schwankungen vor, ist eher zu erwarten, dass ein Bedarf an einer Stützleistung entstehen kann. Sind aber kaum Schwankungen zu beobachten, ist eher davon auszugehen, dass kein Bedarf an einer Stützleistung bevorsteht.

Wenn ein Bedarf an einer Stützleistung bevorsteht oder zu erwarten ist, wird besonders vorgeschlagen, dass getrennte Wechselrichter ihren Betriebsmodus so verändern, dass sie als blockierte Wechselrichter betrieben werden. Hier wurde besonders erkannt, dass der Wechsel von einem getrennten Wechselrichter zu einem blockierten Wechselrichter eine signifikante Verzögerungszeit in Anspruch nehmen kann. Besonders kommt hier in Betracht, dass zunächst der Gleichspannungszwischenkreis geladen werden muss. Es können auch Magnetisierungen von Drosseln vorzusehen sein. Solche Verzögerungszeiten können so groß sein, dass ein plötzlich auftretender Bedarf einer Stützleistung nicht ausreichend schnell befriedigt werden kann. Daher wird vorgeschlagen, einen mehrere oder alle getrennten Wechselrichter in blockierte Wechselrichter zu ändern.

All diese Kriterien können auch kombiniert werden. Durch Temperatur kann die tatsächliche Belastung der Wechselrichteranordnung gut erkannt werden. Anhand der Zwischenkreisspannung kann eine erzeugerseitige Leistungsänderung, insbesondere eine Änderung der vorhandenen Windleistung, schnell erkannt werden und darauf reagiert werden. Anhand der Netzspannung kann ein Stützleistungsbedarf im elektrischen Versorgungsnetz erkannt werden und darauf reagiert werden. Auch die Untervarianten, eine Netzspannung über ihre absolute Amplitude zu überwachen und Schwankungen zu überwachen können kombiniert werden, denn in einem Fall werden blockierte Wechselrichter in aktive Wechselrichter geändert und im andern Fall werden getrennte Wechselrichter in blockierte Wechselrichter geändert. Beides kann zugleich auftreten und sinnvollerweise dann auch zugleich umgesetzt werden.

Vorzugsweise erfolgt eine oder beide Auswahlen in Abhängigkeit von einer Schwankungsbreite der Abgabeleistung. Die Abgabeleistung kann besonders durch schwankende Windgeschwindigkeit schwanken. Um diese Schwankungsbreite aufzufangen wird vorgeschlagen, entsprechend viele blockierte Wechselrichter vorzusehen.

Auch die einen oder mehreren Auswahlen in Abhängigkeit einer Schwankungsbreite der Abgabeleistung ist mit den übrigen Maßnahmen kombinierbar, denn diese Berücksichtigung der Schwankungsbreite der Abgabeleistung berücksichtigt besonders die Variation einer Windgeschwindigkeit, während die übrigen genannten Kriterien andere Szenarien berücksichtigen. Die Abgabeleistung eines Speichersystems kann auch in Abhängigkeit einer Windgeschwindigkeit variieren, um Leistungsschwankungen einer Windenergieanlage, die in dasselbe elektrische Versorgungsnetz einspeist, zu kompensieren.

Gemäß einer Ausführungsform wird vorgeschlagen, dass ein Verhalten der Wechselrichteranordnung über ein Modell modelliert wird und eine Auswahl der Wechselrichter als aktive Wechselrichter oder als passive Wechselrichter und optional einer Auswahl der passiven Wechselrichter als blockierte Wechselrichter oder getrennte Wechselrichter in Abhängigkeit von einem Verhalten des Modells erfolgt. Somit wird das Verhalten der Wechselrichter über ein Modell modelliert. Das Modell bildet somit die Wechselrichteranordnung nach. Die so in dem Modell modellierte Wechselrichteranordnung kann entsprechend in einem aktuellen Arbeitspunkt betrieben werden. Dieser Arbeitspunkt kann durch den aktuellen Einspeisestrom, insbesondere Einspeisescheinstrom, die aktuelle Spannung und eine Temperatur bestimmt werden, insbesondere durch eine Außentemperatur. In dem Modell kann dann erkannt werden, ob eine Überlastung oder mangelnde Auslastung vorliegt, oder ob ein optimaler Betrieb vorliegt.

In Abhängigkeit davon können dann die Wechselrichter entsprechend als aktive Wechselrichter oder passive Wechselrichter, insbesondere mit der Unterscheidung zwischen blockiertem Wechselrichter und getrenntem Wechselrichter ausgewählt werden. Die Auswahl kann wie in vorstehenden Ausführungsformen beschrieben umgesetzt werden. Insbesondere kann das Modell helfen, die Kriterien zu überwachen, also insbesondere die Abgabeleistung, einen Verlust der Wechselrichteranordnung, eine Temperatur der Wechselrichteranordnung, eine Zwischenkreisspannung, eine Netzspannung und/oder eine Schwankungsbreite der Abgabeleistung. Besonders wird vorgeschlagen, dass diese Werte oder ein Teil davon, aus dem Modell entnommen werden. Das ist besonders dafür vorgesehen, dass das Modell möglichst mit demselben Arbeitspunkt betrieben wird und sich die entsprechenden Werte dann ergeben und im Grunde nur aus dem Modell ausgelesen zu werden brauchen. Vorzugsweise ist das Modell Teil eines Zustandsbeobachters.

Besonders kann über das Modell eine Verlustleistung bestimmt werden, und darüber eine Effizienz der Wechselrichteranordnung beurteilt werden.

Gemäß einer Ausführungsform wird vorgeschlagen, dass ein Verhalten der Wechselrichteranordnung über das Modell modelliert wird und das Modell mit einer Testkonfiguration simuliert wird. Dazu wird vorgeschlagen, dass die Testkonfiguration durch eine Auswahl der Wechselrichter als aktive Wechselrichter oder als passive Wechselrichter vorgegeben wird. Optional kann zusätzlich vorgesehen sein, dass die Testkonfiguration durch eine Auswahl der passiven Wechselrichter als blockierte Wechselrichter oder als getrennte Wechselrichter vorgegeben wird. Die Simulation wird also beispielsweise mit 10 aktiven Wechselrichtern, 5 blockierten Wechselrichtern und 5 getrennten Wechselrichtern durchgeführt, wenn die Wechselrichteranordnung insgesamt 20 Wechselrichter aufweist, um ein anschauliches Beispiel zu nennen.

Diese Aufteilung ist dann also die Testkonfiguration. Das Modell wird dann mit dieser Testkonfiguration simuliert, beispielsweise für einen vorgegebenen Zeitraum. Der vorgegebene Zeitraum kann insbesondere im Bereich von einer Minute bis 15 Minuten liegen Dadurch kann im Wesentlichen eine kurzzeitige Prognose durchgeführt werden. Es kommt aber auch in Betracht, dass das Modell, oder mehrere Modelle parallel, dauerhaft betrieben werden.

Es wird nun vorgeschlagen, die Testkonfiguration zu variieren, also beispielsweise als weitere Testkonfiguration 11 aktive Wechselrichter, 4 blockierte Wechselrichter und 5 getrennte Wechselrichter vorzusehen, um das obige Beispiel zu variieren. Auf diese Art und Weise können mehrere Testkonfigurationen gebildet werden und zu jeder Testkonfiguration wird das Modell durchsimuliert. Entsprechend ergibt sich für jede Testkonfiguration ein Simulationsergebnis.

In Abhängigkeit von den Simulationsergebnissen wird dann eine Testkonfiguration ausgewählt und entsprechend in dertatsächlichen Windenergieanlage implementiert. Besonders erfolgt die Auswahl der Testkonfiguration unter Bewertung von Randbedingungen.

Insbesondere soll die Effizienz verglichen werden, die sich für unterschiedliche Testkonfigurationen ergibt. Zusätzlich sind aber Randbedingungen zu betrachten, die entweder in die Bewertung einfließen können, zum Beispiel durch ein Gütekriterium, oder die feste Grenzen festlegen, die einzuhalten sind. Dann kann auch von der Berücksichtigung von Randbedingungen gesprochen werden. Eine Randbedingung kann sein, einen Grenzleistungswert oder eine Grenztemperatur nicht zu überschreiten.

Alle Testkonfigurationen, die dazu geführt haben, dass diese Randbedingung nicht eingehalten wurde, weil beispielsweise eine Temperatur zu groß geworden ist, dürfen dann nicht ausgewählt werden, selbst wenn sie zur besten Effizienz geführt hätten.

Eine weitere Randbedingung kann sein, dass für jeden Wechselrichter ein maximaler Teilstrom vorgegeben wird, der nicht erreicht oder überschritten werden darf.

Besonders kann vorgesehen sein, dass die Einspeiseeinrichtung mit einer Konfiguration betrieben wird, die somit als Betriebskonfiguration bezeichnet werden kann. In dem Modell kann eine andere Konfiguration als Simulationskonfiguration eingestellt sein und simuliert werden. Es kommt auch in Betracht, mehrere Simulationskonfigurationen vorzusehen. Es können dann die Betriebskonfiguration und die wenigstens eine Simulationskonfiguration verglichen werden. Wenn sich dabei eine Simulationskonfiguration als geeigneter herausstellt, kann diese als neue Betriebskonfiguration gewählt werden. Es kann hier als eine Randbedingung eine minimale Betriebsdauer vorgesehen sein, für die die Einspeiseeinrichtung wenigstens betrieben wird, bevor ein Wechsel durchgeführt wird.

Vorzugsweise wird vorgeschlagen, dass für eine Höhe der Abgabeleistung eine Auswahl der Wechselrichter als aktive Wechselrichter oder als passive Wechselrichter getroffen wird, mit der getroffenen Auswahl die Einspeiseeinrichtung betrieben wird, oder das Modell simuliert wird, ein Wirkungsgradmaß als Ergebnis des Betriebs bzw. der Simulation erfasst wird, und die Auswahl zusammen mit der Höhe der Abgabeleistung und dem Wirkungsgradmaß als Referenzkonfiguration abgespeichert wird, optional zusammen mit wenigstens einer Eigenschaft oder Randbedingung, und nach einer Veränderung der Höhe der Abgabeleistung eine Auswahl der Wechselrichter als aktive Wechselrichter oder als passive Wechselrichter in Abhängigkeit von wenigstens einer Referenzkonfiguration getroffen wird.

Insoweit wird auf einfache Art und Weise eine adaptive Auswahl ermöglicht. Die Einspeiseeinrichtung wird mit einer Auswahl betrieben und liefert dabei ein Ergebnis, nämlich besonders einen Wirkungsgrad, der somit das Wirkungsgradmaß bildet. Das Wirkungsgradmaß kann aber auch durch eine andere Größe gegeben sein, z.B. durch eine erfasste erzeugte Leistung, die der Abgabeleistung gegenübergestellt werden kann.

Es kann dann eine Tabelle vorgesehen sein, in der in Abhängigkeit der Höhe der Abgabeleistung die betreffende Auswahl und das Wirkungsgradmaß abgespeichert wird. Es kann auch ein Feld statt der Tabelle vorgesehen sein, in dem bspw. in Abhängigkeit von der Höhe der Abgabeleistung und in Abhängigkeit von der Auswahl, z.B. in Abhängigkeit von der Anzahl aktiver Wechselrichter, das Abgabemaß abgespeichert wird. Zusätzlich kann, in der Tabelle, oder dem Feld, wenigstens eine Eigenschaft oder Randbedingung abgespeichert werden. Eine Randbedingung kann bspw. eine Anzahl an erlaubten Wechseln pro Zeiteinheit sein, wenn diese Anzahl unterschiedlich gewählt werden kann. Als Eigenschaft kann eine Wechselrichtertemperatur, alle Wechselrichtertemperaturen, eine Durchschnittstemperatur, eine maximale Differenztemperatur zwischen höchster und niedrigster Temperatur zweier Wechselrichter, oder eine Temperaturstreuung sein.

Statt die Einspeiseeinrichtung mit der Auswahl zu betreiben, kann sie auch simuliert werden, und ansonsten wie bei dem Betrieb vorgegangen werden.

Sowohl durch die Simulation, als auch durch die Auswertung eines Betriebs kann nach und nach eine Datenbank mit Referenzkonfigurationen angelegt werden. Bei einer neuen Höhe der Abgabeleistung kann dann die Auswahl durch die bereits aufgenommenen Referenzkonfigurationen erfolgen. Liegt zu einer Höhe einer Abgabeleistung keine Referenzkonfiguration vor, so kann eine neue geschaffen werden, und/oder zwischen wenigstens zweien interpoliert werden, oder ausgehend von wenigstens einer extrapoliert werden.

Vorzugsweise wird eine Auswahl in Abhängigkeit von wenigstens einer Referenzkonfiguration getroffen, damit die Einspeiseeinrichtung betrieben wird und dazu dann wieder das Wirkungsgradmaß erfasst und ggf. die Referenzkonfiguration dann aktualisiert, wenn sich eine Änderung ergeben hat. Vorzugsweise wird zu der Referenzkonfiguration eine Variation vorgenommen, um zu prüfen, ob eine Verbesserung erreichbar ist. Die Variation kann vorzugsweise in dem Modell erfolgen, sodass zum Betrieb der Einspeiseeinrichtung jeweils die als am besten, nämlich mit bestem Wirkungsgradmaß, abgespeicherte Referenzkonfiguration verwendet wird, und parallel eine Variation mit einer Simulation durchgeführt wird.

Gemäß einer Ausführungsform wird vorgeschlagen, dass von den Wechselrichtern jeweils eine Wechselrichtertemperatur erfasst wird, insbesondere jeweils als Temperatur der Schaltungsanordnung des jeweiligen Wechselrichters, eine konkrete Auswahl, welcher Wechselrichter als aktiver Wechselrichter und welcher als passiver Wechselrichter betrieben wird, in Abhängigkeit von den Wechselrichtertemperaturen getroffen wird, insbesondere dass die konkrete Auswahl in Abhängigkeit eines Vergleichs der Wechselrichtertemperaturen getroffen wird, und dass optional in Abhängigkeit der Wechselrichtertemperaturen die konkrete Auswahl verändert wird.

Hier wurde erkannt, dass nicht nur relevant ist, wie viele Wechselrichter als aktive Wechselrichter, und wie viele als passive Wechselrichter betrieben werden, sondern auch, welche Wechselrichter konkret dazu ausgewählt werden. Liegen bspw. 15 Wechselrichter vor, kann es in Abhängigkeit von der Höhe der Abgabeleistung dazu kommen, dass 10 Wechselrichter als aktive, und 5 als blockierte Wechselrichter betrieben werden. Sind die Wechselrichter von 1 bis 15 durchnummeriert, können bspw. die Wechselrichter Nr. 1 bis Nr. 10 als aktive Wechselrichter betrieben werden, die Wechselrichter Nr. 11 bis 15 aber als blockierte.

Wird diese beispielhafte Auswahl immer so getroffen, altern die Wechselrichter Nr. 1 bis 10 schneller, als die Wechselrichter Nr. 11 bis 15. Daher wird vorgeschlagen, eine temperaturabhängige Auswahl zu treffen. Besonders wird vorgeschlagen, dass Wechselrichter mit niedriger Temperatur eher als aktive Wechselrichter betrieben werden, als Wechselrichter mit hoher Temperatur. Bei den Wechselrichtern mit niedriger Temperatur steigt diese dann aber an, sobald sie als aktive Wechselrichter betrieben werden, während die Temperatur der passiven Wechselrichter abfällt.

Entsprechend wird vorzugsweise vorgeschlagen, in Abhängigkeit von der Temperatur die Betriebsweisen der Wechselrichter gelegentlich zu tauschen, die konkrete Auswahl also zu verändern. So können dann z.B. die Wechselrichter Nr. 1 und Nr. 11 ihre Rollen tauschen. Dann werden Wechselrichter Nr. 2 bis 11 als aktive Wechselrichter betrieben, und Wechselrichter Nr. 12 bis 15 und Nr. 1 als passive Wechselrichter.

Gemäß einer Ausführungsform wird vorgeschlagen, dass jeder Wechselrichter einen Gleichspannungszwischenkreis mit einer Zwischenkreisspannung aufweist und für die blockierten Wechselrichter eine Zwischenkreissteuerung vorgesehen ist, die die Zwischenkreisspannung in einem Spannungsband hält. Hier wurde besonders erkannt, dass es Konstellationen geben kann, bei denen die Gleichspannungszwischenkreise der Wechselrichter getrennt sind. In diesem Fall würde ein klassisches Abschalten einiger Wechselrichter auch dazu führen, dass die Zwischenkreisspannung abfällt. Bei bisherigen Konzepten ist das auch erwünscht, denn solche abgeschalteten Wechselrichter sollen keinen Beitrag leisten, weil aus Gründen der Effizienz nur einige Wechselrichter einspeisen sollen.

Erfindungsgemäß wurde aber erkannt, dass es vorteilhaft ist, statt abgeschalteter Wechselrichter, blockierte Wechselrichter vorzusehen. Bei diesen blockierten Wechselrichtern wird somit vorgeschlagen, deren Zwischenkreisspannung in dem Spannungsband zu halten, das für eine Einspeisung benötigt wird. Dadurch kann gewährleistet werden, dass im Falle eines plötzlichen Bedarfs, für den ein blockierter Wechselrichter einspeisen soll, dieser auch sofort einspeisen kann, weil seine Zwischenkreisspannung dafür einen geeigneten Wert aufweist.

Die Zwischenkreissteuerung kann so vorgesehen sein, dass sie beispielsweise durch einen generatorseitigen Hochsetzsteller, wenn eine Windenergieanlage vorliegt, den Gleichspannungszwischenkreis steuert, also anschaulich gesprochen auflädt bzw. nachlädt, um die Spannung in dem Spannungsband zu halten. Es kommt aber auch in Betracht, dass die Steuerung der Zwischenkreisspannung netzseitig über den Wechselrichter erfolgt. Dazu kann kurzzeitig etwas Strom aus dem Netz bzw. von den aktiven Wechselrichtern, in den Gleichspannungszwischenkreis geleitet werden, oder auch ebenso kurzzeitig, also für eine kurze Zeit, eingespeist werden, um die Zwischenkreisspannung in einem vorgegebenen Spannungsband zu halten. Die hierfür benötigte Leistung bzw. Energiemenge ist sehr gering, weil letztlich nur Kriechströme ausgeglichen werden müssen, die zu einer Entladung oder Ladung der entsprechenden Zwischenkreiskondensatoren führen könnten. Beispielsweise kann dafür eine Ansteuerung des Zwischenkreises einmal pro Minute für 10 ms erfolgen.

Gemäß einer Ausgestaltung ist vorgesehen, dass bei einem Wechsel eines aktiven Wechselrichters in einen passiven Wechselrichter die von dem aktiven Wechselrichter vor dem Wechsel erzeugte Teilleistung auf die verbleibenden aktiven Wechselrichter zur Erzeugung verteilt wird. Dadurch kann ein gezielter Übergang gestaltet werden.

Dabei ist vorgesehen, dass zum Verteilen eine Übergangsvorschrift vorgesehen ist. Dazu wird vorgeschlagen, dass die Übergangsvorschrift einen zeitlichen Verringerungsverlauf zum Verringern der Teilleistung des wechselnden aktiven Wechselrichters vorgibt. Wenn also für den aktiven Wechselrichter vorgesehen ist, dass dieser ein passiver Wechselrichter wird, wird die Teilleistung des aktiven Wechselrichters gemäß diesem zeitlichen Verringerungsverlauf verringert, nämlich auf null. Die verbleibenden aktiven Wechselrichter können dann entsprechend kontinuierlich diese Leistung übernehmen.

Außerdem oder alternativ wird vorgeschlagen, dass die Übergangsvorschrift jeweils einen zeitlichen Erhöhungsverlauf zum Erhöhen der Teilleistungen der verbleibenden Wechselrichter vorgibt. Damit kann gezielt vorgegeben werden, wie sich die aktiven Wechselrichter verhalten. Sie können ihre abgegebene Teilleistung entsprechend erhöhen, bis sie die Teilleistung übernommen haben, die bis dahin der wechselnde aktive Wechselrichter erzeugt hat.

Insbesondere wird vorgeschlagen, dass dieser zeitliche Verringerungsverlauf für den wechselnden aktiven Wechselrichter und der zeitliche Erhöhungsverlauf für die verbleibenden aktiven Wechselrichter kombiniert werden. Insbesondere wird vorgeschlagen, dass ein zeitlicher Verringerungsverlauf für den wechselnden aktiven Wechselrichter vorgesehen wird und der zeitliche Erhöhungsverlauf davon abhängig bestimmt wird. Vorzugsweise wird dieser zeitliche Erhöhungsverlauf gleichmäßig auf die verbleibenden aktiven Wechselrichter verteilt.

Insbesondere wird vorgeschlagen, dass der Verringerungsverlauf und/oder der Erhöhungsverlauf jeweils als in einer Steigung parametrierbarere Rampen ausgebildet sind. Somit erfolgt das zeitliche Verringern anhand einer abfallenden Rampe und die Steigung dieser abfallenden Rampe kann parametriert werden. Das kann besonders davon abhängen, wie schnell sich die Leistung ändert. Entsprechend kann für den Erhöhungsverlauf eine ansteigende Rampe vorgesehen sein, die parametriert werden kann.

Gemäß einer Ausführungsform wird vorgeschlagen, dass zum Steuern der Wechselrichteranordnung eine zentrale Steuerung vorgesehen ist und die zentrale Steuerung Auswirkungen durch ein Auswählen der aktiven, passiven, blockierten und/oder getrennten Wechselrichter auf Betriebszustände der Wechselrichteranordnung überwacht. Hier wurde besonders erkannt, dass durch das Auswählen der Wechselrichter, also insbesondere dadurch, dass nicht alle Wechselrichter als aktive Wechselrichter betrieben werden, Interaktionen zwischen den Wechselrichtern auftreten können oder auch einzelne Wechselrichter Reaktionen zeigen können. Dafür wird die Überwachung vorgeschlagen, die ggf. dazu führen kann, dass die Auswahl der Wechselrichter als aktive, blockierte und/oder getrennte Wechselrichter verändert wird.

Insbesondere wird vorgeschlagen, Folgendes zu überwachen.

Es wird vorgeschlagen, dass eine Reaktion eines Chopperkreises überwacht wird. Ein Chopperkreis ist an einen Gleichspannungszwischenkreis angeschlossen und kann bei einer erhöhten Zwischenkreisspannung Leistung aus diesem Zwischenkreis abführen, nämlich über einen Widerstand führen. Das wird auch als Choppern bezeichnet. Hierdurch kann besonders überwacht werden, ob eine solche Chopperregelung auch bei einem blockierten Wechselrichter ordnungsgemäß funktioniert. Anhand einer Reaktion des Chopperkreises kann auch erkannt werden, ob unerwünscht Leistung dem entsprechenden Zwischenkreis zugeführt wird, die dann zum Auslösen des Chopperkreises führt. In dem Fall kann beispielsweise eine Fehlermeldung ausgegeben werden oder der so überwachte blockierte Wechselrichter kann in seiner Funktion geändert werden, also ein aktiver Wechselrichter werden oder ein getrennter Wechselrichter. Dann sollte seine bisherige Funktion aber durch einen anderen Wechselrichter wahrgenommen werden.

Ein weiterer Vorschlag ist, dass ein Auftreten von Kreisströmen überwacht wird. Durch Kreisströme können besonders die Gleichspannungszwischenkreise der blockierten Wechselrichter gespeist und auf einem Arbeitsniveau gehalten werden, also insbesondere in einem Spannungsband gehalten werden. Dazu kann überwacht werden, ob Kreisströme vorhanden sind, die das erreichen. Dabei kann auch überprüft werden, ob unerwünschte Kreisströme vorhanden sind, die selbst beim Erreichen eines gewünschten Spannungsniveaus im Zwischenkreis weiterfließen und dadurch eher Verluste erzeugen. In dem Fall kann eine Warnung herausgegeben werden, oder es kann auch, gleiches gilt bei der oben beschriebenen Überwachung, auf eine Reaktion eines Chopperkreises, die konkrete Steuerung der Halbleiterschaltung der aktiven Wechselrichter geändert werden. Insbesondere können Schalterverzögerungen für die aktiven Wechselrichter vorgesehen sein, durch die die aktiven Wechselrichter im Bezug untereinander Schaltzeitverzögerungen durchführen können. Hier wurde besonders erkannt, dass Schaltzeitverzögerungen zwischen parallel geschalteten Wechselrichtern zu entsprechenden Kreisströmen führen können.

Es wird auch vorgeschlagen, dass ein Erreichen von Stromgrenzen überwacht wird. Eine solche Überwachung wird besonders für jeden Wechselrichter einzeln vorgeschlagen, insbesondere für jeden aktiven Wechselrichter. Ein entsprechender Stromsensor ist an jedem Wechselrichter vorgesehen, aber die Auswertung kann zentral in der zentralen Steuerung erfolgen. Besonders ist vorgesehen, dass dann wenn ein Wechselrichter eine Stromgrenze erreicht, die zentrale Steuerung steuern kann, dass ein blockierter Wechselrichter und/oder getrennter Wechselrichter in einen aktiven Wechselrichter geändert wird.

Besonderes wird auch vorgeschlagen, dass in Abhängigkeit von einem Ergebnis der Überwachung die Steuerung der Wechselrichteranordnung verändert wird. Hierunter fällt einen Wechselrichter bzw. mehrere in ihrer Funktion zu ändern. Also von einem aktiven Wechselrichter in einen passiven Wechselrichter bzw. einen blockierten Wechselrichter und von einem getrennten Wechselrichter in jeweils einen anderen zu ändern. Es kommt aber auch in Betracht, dass eine konkrete Ansteuerung jeweils der Schaltungsanordnung eines Wechselrichters verändert wird. Hier kommt besonders in Betracht, Schaltverzögerungen der Schaltungsanordnungen untereinander zu verändern, und dass über die zentrale Steuerung zu koordinieren.

Gemäß einer Ausgestaltung wird vorgeschlagen, dass eine zu erwartende Leistungsänderung der Abgabeleistung prognostiziert oder vorgegeben wird. Eine solche Prognose kann in Abhängigkeit vom Wind also in Abhängigkeit von einer Wettervorhersage erfolgen. Dabei können auch Turbulenzen berücksichtigt werden, die vorhergesagt werden, oder die aktuell bereits erkannt werden. Bei turbulentem Wind sind somit starke Leistungsänderungen zu erwarten.

Die zu erwartende Leistungsänderung, die prognostiziert oder vorgegeben wird, kann synonym auch als Änderungserwartung bezeichnet werden. Die Wechselrichter werden also in Abhängigkeit der Änderungserwartung ausgewählt.

Auch netzseitige Ereignisse können dazu führen, dass eine Leistungsänderung zu erwarten ist, insbesondere eine Änderung des Scheinstroms, aber auch eine Änderung des Wirkstroms kommt in Betracht. Besonders bei einem zu erwartenden Netzfehler kann vorgesehen sein, dass dieser gesteuert werden muss. Für ein solches Durchsteuern muss ein schneller Leistungsabfall und kurze Zeit später ein schneller Leistungsanstieg von der Wechselrichteranordnung realisiert werden können. In einem solchen Fall einer Fehlerdurchsteuerung, was auch als FRT-Fall bezeichnet wird, kann eine solche Leistungsänderung dauerhaft erwartet werden bzw. es kann vorgesehen sein, dass die Wechselrichteranordnung dauerhaft auf ein solches Ereignis vorbereitet sein muss.

Auch hier können sich Leistungsänderungen auf Wirkleistung, Blindleistung oder Scheinleistung beziehen und auch hier kann die konkrete Umsetzung die Betrachtung eines entsprechenden Stroms also Wirkungsstrom, Blindstrom oder Scheinstrom betreffen.

Dazu wird nun vorgeschlagen, dass in Abhängigkeit von der zu erwartenden Leistungsänderung eine Aufteilung der Wechselrichter erfolgt.

Somit wird vorgeschlagen, davon abhängig passive Wechselrichter als blockierte oder getrennte Wechselrichter zu betreiben. Hier wurde besonders erkannt, dass blockierte Wechselrichter schnell auf Leistungsänderungen reagieren können, nämlich schnell in aktive Wechselrichter umgewandelt werden können, was bei den getrennten Wechselrichtern nicht der Fall ist.

Insbesondere wird vorgeschlagen, dass die zu erwartende Leistungsänderung in einen Anteil schneller Leistungsänderungen und einen Anteil langsamer Leistungsänderungen unterteilt wird und umso mehr passive Wechselrichter als blockierte Wechselrichter betrieben werden, je größer der Anteil zu erwartender schneller Leistungsänderungen ist. Hier wird besonders eine praktikable Lösung vorgeschlagen, demnach eine Klassifizierung der zu erwartenden Leistungsänderungen, also der Änderungserwartung vorgenommen wird. Durch diese Klassifizierung kann eine klare Unterteilung vorgenommen werden und anhand dessen kann dann der Anteil blockierter Wechselrichter an den passiven Wechselrichtern insgesamt eingestellt werden. Der Anteil blockierter Wechselrichter kann auch 100 % oder 0 % betragen. Besonders wird der Anteil hoch sein, wenn ein Anteil schneller Leistungsänderungen hoch ist, insbesondere, wenn nur schnelle Leistungsänderungen, oder auch nur eine schnelle Leistungsänderung in signifikanter Höhe erwartet wird.

Außerdem oder alternativ wird vorgeschlagen, dass ein Anteil blockierter Wechselrichtern im Bereich von 90 % bis 100 % liegt, wenn die Änderung der Leistung dem Betrage nach größer als 20 % einer Nennleistung der Wechselrichteranordnung pro Sekunde beträgt. Dadurch kann eine sehr starke und schnelle Leistungsänderung definiert werden. Eine Änderung um 20 % der Nennleistung in einer Sekunde bedeutet, dass sich die Leistung um die Nennleistung in 5 Sekunden ändert. Wenn das der Fall ist, sollten überwiegend blockierte Wechselrichter verwendet werden, und möglichst keine getrennten Wechselrichter. Daher wird dann besonders ein Anteil von 100 % vorgeschlagen. Wenn dieser etwas geringer ausfällt, zum Beispiel 90 % oder höher, liegt immer noch ein sehr hoher Anteil blockierter Wechselrichter vor.

Erfindungsgemäß wird auch eine wechselrichtergesteuerte Einspeiseeinheit vorgeschlagen, insbesondere eine Windenergieanlage oder ein Speichersystem. Die Einspeiseeinheit umfasst
- eine Wechselrichteranordnung mit mehreren Wechselrichtern, zum Erzeugen einer Abgabeleistung und zum Einspeisen der Abgabeleistung als elektrische Leistung in das elektrische Versorgungsnetz, wobei
- jedem Wechselrichter ein Trennschalter zugeordnet ist, um den jeweiligen Wechselrichter galvanisch vom elektrischen Versorgungsnetz zu trennen,
- jeder Wechselrichter eine Schaltungsanordnung aus Halbleiterschaltern aufweist, um über eine gepulste Ansteuerung der Schaltungsanordnung einen möglichst sinusförmigen Ausgangsstrom zu erzeugen, und
- jeder Wechselrichter dazu vorbereitet ist, jeweils eine variable Teilleistung zu erzeugen, und wobei
- die Wechselrichteranordnung so verschaltet ist, dass sich die Abgabeleistung als Summe aller erzeugten Teilleistungen ergibt, wobei
- eine zentrale Steuereinheit zum Steuern der Wechselrichteranordnung vorgesehen ist und die zentrale Steuereinheit dazu vorbereitet ist, die Wechselrichteranordnung so zu steuern, dass
- in Abhängigkeit von einer Höhe der Abgabeleistung,
- einer oder mehrere der Wechselrichter als aktive Wechselrichter betrieben werden, wobei jeder aktive Wechselrichter jeweils eine Teilleistung erzeugt, und
- die übrigen Wechselrichter als passive Wechselrichter betrieben werden, wobei jeder passive Wechselrichter keine Teilleistung erzeugt, wobei
- einer oder mehrere der passiven Wechselrichter als blockierte Wechselrichter betrieben werden und galvanisch mit dem elektrischen Versorgungsnetz verbunden bleiben.

Besonders sind die Wechselrichter der Wechselrichteranordnung parallelgeschaltet, so dass sich die Teilleistungen zu der Abgabeleistung als Summe zusammensetzen. Die zentrale Steuereinheit, die synonym auch als Zentralsteuereinheit bezeichnet werden kann, kann hierfür insbesondere für jeden Wechselrichter eine Steuerung durchführen. Dazu kann die zentrale Steuereinheit jeweils Steuersignale an die Wechselrichter übertragen. Jeder Wechselrichter kann dafür selbst eine Einzelsteuereinrichtung aufweisen und Steuersignale von der zentralen Steuereinheit empfangen. In dieser Konstellation kann die zentrale Steuereinheit beispielsweise an jeden Wechselrichter einen individuellen Leistungssollwert übertragen und jede Einzelsteuereinrichtung des betreffenden Wechselrichters setzt diesen dann in konkrete Steuersignale für die Halbleiterschalter ihrer Schaltungsanordnung um.

Über die zentrale Steuereinheit kann auch vorgegeben werden, welche Wechselrichter als aktive Wechselrichter und welche als blockierte Wechselrichter betrieben werden, oder welche als getrennte Wechselrichter betrieben werden. Somit ist die zentrale Steuereinheit dazu vorbereitet die Wechselrichteranordnung entsprechend zu steuern. Das kann auch beinhalten, dass in der zentralen Steuereinheit eine Auswahlvorschrift implementiert ist, die in Abhängigkeit von einer insgesamt zu erzeugenden Abgabeleistung und gegebenenfalls in Abhängigkeit von weiteren Eingangsgrößen und/oder Randbedingungen auswählt, welche Wechselrichter als aktive Wechselrichter und welche als blockierte Wechselrichter betrieben werden. Insbesondere kann jeder Wechselrichter von der zentralen Steuereinheit ein Blockiersignal erhalten, um dadurch als blockierter Wechselrichter betrieben zu werden und seine Halbleiterschalter nicht anzusteuern.

Insbesondere wird vorgeschlagen, dass die Einspeiseeinheit, insbesondere ihre zentrale Steuereinheit, dazu vorbereitet ist, ein Verfahren gemäß einer der vorstehend beschriebenen Ausführungsformen auszuführen.

Die Erfindung wird nun nachfolgend anhand von Ausführungsformen unter Bezugnahme auf die begleitenden Figuren beispielhaft näher erläutert.
- Figur 1: zeigt eine Windenergieanlage in einer perspektivischen Darstellung.
- Figur 2: zeigt eine Einspeiseeinheit in einer strukturellen und dabei schematischen Darstellung.
- Figur 3: zeigt zwei Diagramme zur Veranschaulichung der Aufteilung und Wirkung mehrerer Wechselrichter einer Wechselrichteranordnung.

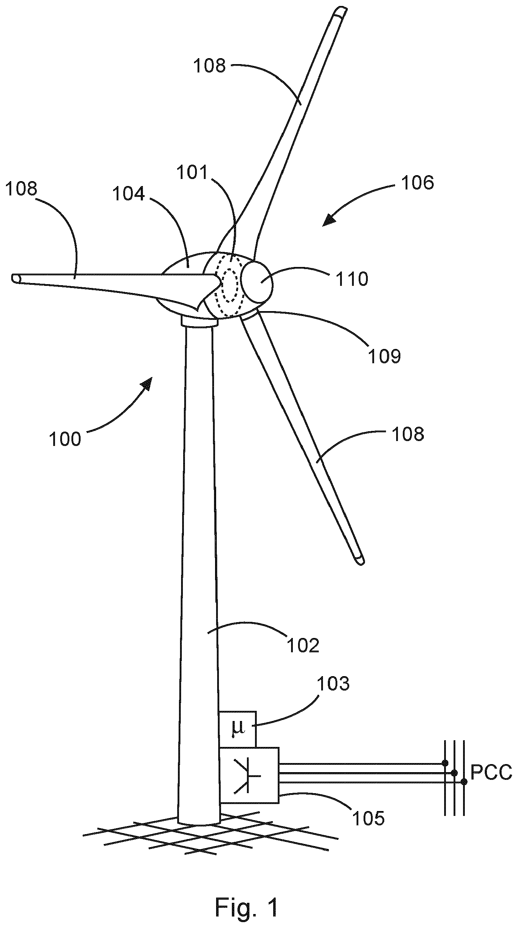

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

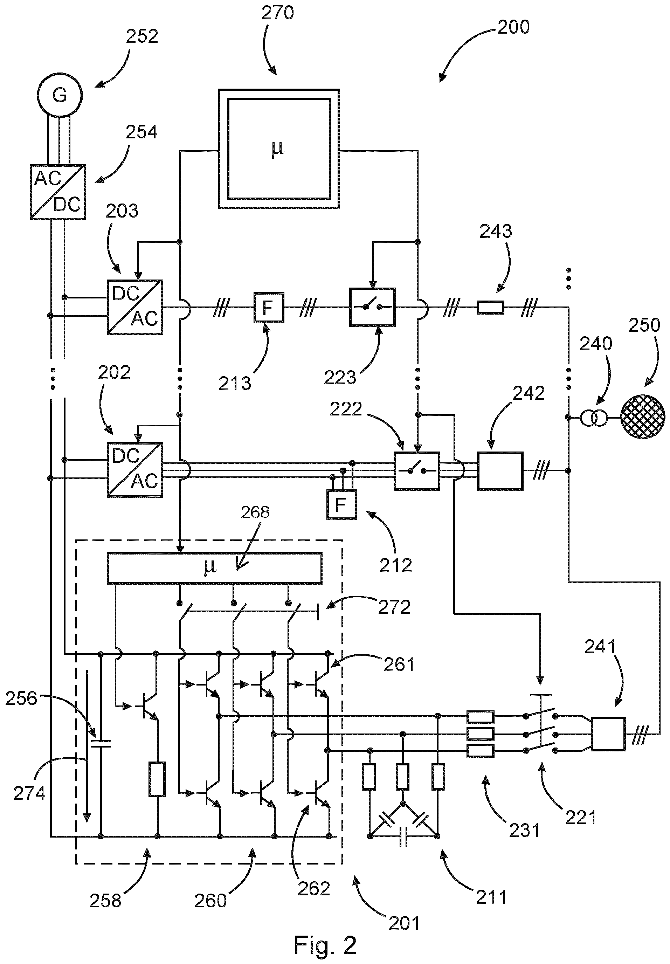

Fig. 2 zeigt eine Einspeiseeinheit 200. Diese Einspeiseeinheit 200 weist mehrere Wechselrichter 201 - 203 auf. Diese Wechselrichter 201 - 203 sind in der Figur 2 in unterschiedlicher Detailtiefe dargestellt, sollen grundsätzlich aber einen gleichen Aufbau aufweisen. Der dritte Wechselrichter 203 steht zudem repräsentativ für diverse Weitere Wechselrichter. Jedem Wechselrichter 201 - 203 ist ein Ausgangsfilter 211, 212 bzw. 213 zugeordnet, sowie ein Trennschalter 221, 222 bzw. 223. Auch die Ausgangsfilter und Trennschalter sind in unterschiedlicher Detailtiefe dargestellt bzw. teilweise nur symbolisch dargestellt. Sie können jeweils auch als Teil des zugehörigen Wechselrichters 201 - 203 angesehen werden. Zu dem ersten Wechselrichter 201 ist zudem eine Ausgangsdrossel 231 dargestellt. Eine solche Ausgangsdrossel ist ebenfalls für die übrigen Wechselrichter jeweils vorzusehen und wurden nur der besseren Übersichtlichkeit halber nicht dargestellt.

Für jeden Wechselrichter ist noch ein Verbindungspunkt 241 - 243 vorgesehen und es ist auch ein gemeinsamer Trafo 240 eingezeichnet

Gemäß der Darstellung der Figur 2 speist die Einspeiseeinheit 200 somit über den gemeinsamen Trafo 240 in ein elektrisches Versorgungsnetz 250 ein. Es kommt aber auch in Betracht, dass die Einspeiseeinheit 200, insbesondere, wenn sie als Windenergieanlage ausgebildet ist, in einem Windpark angeordnet ist und dann nicht eigenständig in ein elektrisches Versorgungsnetz einspeist, sondern in ein Parknetz, in das weitere Einspeiseeinheiten einspeisen. Das Parknetz kann dann mit dem elektrischen Versorgungsnetz verbunden sein, und darüber die gesamte Leistung des Parks, und damit auch die Abgabeleistung der Einspeiseeinheit 200, in das elektrische Versorgungsnetz einzuspeisen.

Die Einspeiseeinheit 200 weist als Energiequelle einen Generator 252 auf, der einen Wechselstrom erzeugt, der über einen Gleichrichter 254 gleichgerichtet wird. Der Gleichrichter 254 stellt dann somit eine Gleichspannung bzw. einen Gleichstrom für die Wechselrichter 201 - 203 zur Verfügung. Diese Gleichspannung wird dann in einem Gleichspannungszwischenkreis bereitgestellt, den jeder Wechselrichter 201 - 203 aufweist. In dem ersten Wechselrichter 201 ist dafür repräsentativ ein Zwischenkreiskondensator 256 eingezeichnet. Bei dem strukturellen Aufbau der Einspeiseeinheit der Figur 2 sind somit die Gleichspannungszwischenkreise der Wechselrichter 201 - 203 galvanisch miteinander verbunden. Es kommen aber auch Strukturen in Betracht, bei denen das nicht der Fall ist. Dann kann ebenfalls ein Generator über einen Gleichrichter eine Gleichspannung bereitstellen. Zusätzlich weist dann aber jeder Wechselrichter einen individuellen Hochsetzsteller auf, über den jeder Wechselrichter einzeln die Gleichspannung erhöht und dadurch seinen Gleichspannungszwischenkreis speist.

Zu Details der Wechselrichter 201 - 203 werden nun Details des ersten Wechselrichters 201 beschrieben, die entsprechend in den übrigen Wechselrichtern aber ebenfalls vorhanden sind. An dem Gleichspannungszwischenkreis, repräsentiert durch den Zwischenkreiskondensator 256, ist eine Chopperschaltung 258 und eine dreiphasige Schaltungsanordnung 260 angeschlossen. Zum Erzeugen eines dreiphasigen Wechselstroms weist die Schaltungsanordnung 260 somit für jede Phase zwei Halbleiterschalter auf, sodass die Schaltungsanordnung 260 insgesamt sechs Halbleiterschalter aufweist. So sind für eine der drei Phasen die Halbleiterschalter 261 und 262 vorgesehen. Offensichtlich ist die gleiche Anordnung sinngemäß auch jeweils für die übrigen Phasen vorgesehen. Nur der Übersichtlichkeit halber sind nur für die beiden Halbleiterschalter 261 und 262 der einen Phase Bezugszeichen eingezeichnet. Die Halbleiterschalter 261 und 262 bilden somit ein Schalterpaar und entsprechend ist ein Schalterpaar für jede Phase vorgesehen.

Die Schaltungsanordnung 260 erzeugt somit einen dreiphasigen Ausgangsstrom und der wird über die Ausgangsdrossel 231 geführt bzw. der dreiphasige Ausgangsstrom ergibt sich erst durch die Ausgangsdrossel 231, nämlich aus den Spannungsimpulsen, die die Schaltungsanordnung 260 erzeugt.

Außerdem ist der Ausgangsfilter 211 vorgesehen, der durch die Schaltpulse bedingte Oberwellen filtern soll.

Schließlich wird der Strom über den Trennschalter 221 geführt und damit von dem Wechselrichter 201 abgegeben.

Zur Einzelsteuerung der Schaltungsanordnung 260 und auch der Chopperschaltung 258 ist eine Teilsteuereinrichtung 268 vorgesehen. Die Teilsteuereinrichtung 268 wird von einer zentralen Steuereinheit 270 angesteuert. Die zentrale Steuereinheit 270 steuert auch die Trennschalter 221. Für die Ansteuerung sowohl der Teilsteuereinrichtung 268 als auch des jeweiligen Trennschalters der betreffenden Wechselrichtereinheit ist in der Figur 2 jeweils eine separate Ansteuerung durch die zentrale Steuereinheit 270 gezeigt. Es kommt aber in Betracht, dass die zentrale Steuereinheit 270 die Teilsteuereinrichtung ansteuert und das Ansteuern des Trennschalters 211 davon ausgehend von der Teilsteuereinrichtung 268 durchgeführt wird. Wenn ein Wechselrichter als blockierter Wechselrichter betrieben wird, kann die zentrale Steuereinheit 270 dazu ein entsprechendes Signal bzw. einen entsprechenden Befehl an die Teilsteuereinrichtung 268 geben. Die Teilsteuereinrichtung 268 blockiert dann das Ansteuern der Schaltungsanordnung also der sechs Halbleiterschalter, einschließlich der benannten Halbleiterschalter 261 und 262.

Um das zu veranschaulichen, ist ein Blockierschalter 272 dargestellt. Dieser Blockierschalter ist aber insbesondere symbolisch zu verstehen und kann entsprechend durch Steueranweisung bzw. Umsetzung der Steuerung in der Teilsteuereinrichtung 268 realisiert sein. Insbesondere kann also der Blockierschalter272 bzw. seine Wirkung auch softwaremäßig realisiert sein.

Wenn ein Wechselrichter, im Beispiel also der erste Wechselrichter 201, als blockierter Wechselrichter betrieben wird, ist somit der Blockierschalter 272 geöffnet, der Trennschalter 221 aber geschlossen. Der Wechselrichter 201 hat dann also noch immer die volle Funktionsfähigkeit, besonders wenn der Blockierschalter 272 nur durch entsprechende Schaltungsbefehle realisiert ist, denn diese durch den Blockierschalter 272 symbolisierte Blockierung kann verzögerungsfrei aufgehoben werden. Unter verzögerungsfrei ist insoweit zu verstehen, dass keine Verzögerung vorliegt, die größer ist, als ohnehin zum Schalten eines Halbleiterschalter benötigt wird.

Dementgegen ist der Trennschalter 221, gleiches gilt natürlich auch für die Trennschalter 222 und 223, als echter hardwaremäßiger Schalter vorhanden. Ihn anzusteuern dauert länger. Davon abgesehen kann sich der Wechselrichter 201 auch in einem anderen Zustand befinden, wenn der Trennschalter 221 geöffnet ist.

Besonders dann, wenn der Gleichspannungszwischenkreis des Wechselrichters 201 nicht mit den Gleichspannungszwischenkreisen der übrigen Wechselrichter galvanisch verbunden ist, kann die Zwischenkreisspannung 274 abfallen und müsste zunächst aufgeladen werden, wenn der Wechselrichter 201 dann wieder einspeisen soll.

Somit veranschaulicht Figur 2 auch die möglichen Betriebszustände eines Wechselrichters, hier nämlich repräsentativ des ersten Wechselrichters 201. Wird der Wechselrichter 201 als aktiver Wechselrichter betrieben, so ist der Trennschalter 221 geschlossen und der symbolische Blockierschalter 272 ebenfalls geschlossen. Wird der Wechselrichter 2012 als blockierter Wechselrichter betrieben, so ist der Trennschalter 221 geschlossen und der symbolische Blockierschalter 272 geöffnet. Wird der Wechselrichter 201 als getrennter Wechselrichter betrieben, so ist der Trennschalter 221 geöffnet und der symbolische Blockierschalter 272 kann dann sinnvollerweise ebenfalls geöffnet sein.

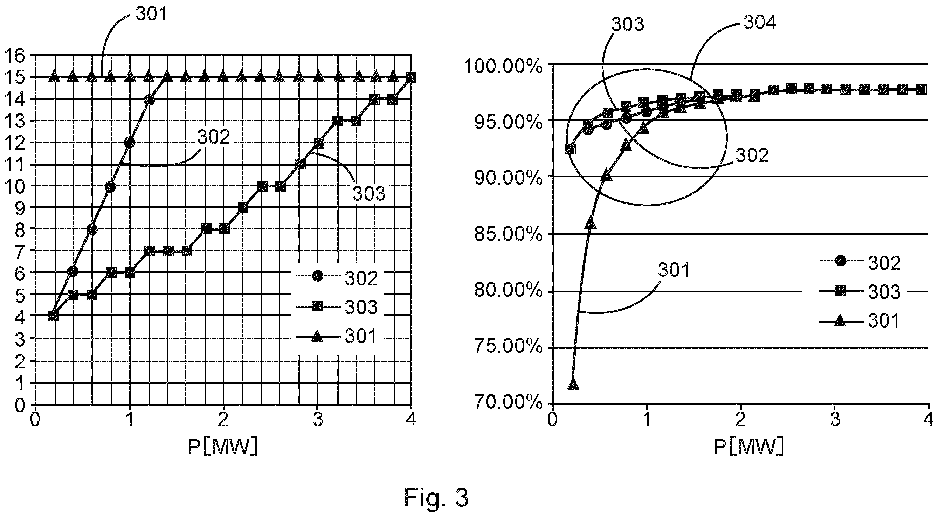

Figur 3 veranschaulicht insgesamt die Wirkung für eine Einspeiseeinheit, wenn einzelne Wechselrichter als aktive, blockierte oder getrennte Wechselrichter betrieben werden.

Die Darstellung ist für eine Einspeiseeinheit mit einer Nennleistung von 4 MW. Die zugehörige Einspeiseeinheit weist insgesamt 15 Wechselrichter auf. Die Anzahl der Wechselrichter, die auch als Umrichter bezeichnet werden können, ist an der Ordinate abgetragen. Die Abszisse zeigt die erzeugbare bzw. zu erzeugende Abgabeleistung in MW.

Es ist zu erkennen, dass bei einer Abgabeleistung von 4 MW die Nennleistung erreicht ist und somit alle 15 Wechselrichter als aktive Wechselrichter betrieben werden.

Ansonsten vergleicht dieses linke Diagramm der Figur 3 drei Varianten, wie die Wechselrichter betrieben werden können.

Gemäß der ersten Variante 301, die durch Dreiecke symbolisiert ist, werden alle Wechselrichter als aktive Wechselrichter betrieben. Jeder Wechselrichter verringert also seine eigene Teilleistung in Abhängigkeit davon, wie viel Abgabeleistung insgesamt erzeugt werden kann.

Gemäß der zweiten Variante 302, die durch Rauten symbolisiert ist, werden einige Wechselrichter bei geringer Abgabeleistung gar nicht betrieben, also getrennt und damit als getrennte Wechselrichter betrieben. Um schnell genug auf Leistungsschwankungen reagieren zu können, werden erst bei geringen Werten der Abgabeleistung einige der Wechselrichter abgeschaltet also als getrennte Wechselrichter betrieben, nämlich nur etwa bis zu einer Abgabeleistung von 1,2 MW. Bei geringeren Abgabeleistungen werden dann entsprechend viele Wechselrichter abgeschaltet. Es sind aber immer wenigstens 4 Wechselrichter als aktive Wechselrichter in Betrieb. Bei einer Abgabeleistung von über 1,2 MW werden alle Wechselrichter als aktive Wechselrichter betrieben. Somit werden also schon ab etwa einem Drittel der Nennleistung der Einspeiseeinheit alle Wechselrichter als aktive Wechselrichter betrieben.

Gemäß der dritten Variante 303 wird vorgeschlagen, in Abhängigkeit von der Abgabeleistung, wenn die Abgabeleistung also unterhalb der Nennleistung der Einspeiseeinheit liegt, einen oder mehrere der Wechselrichter als blockierte Wechselrichter zu betreiben. Ein solcher Wechselrichter, der als blockierter Wechselrichter betrieben wird, kann bei Bedarf sofort wieder als aktiver Wechselrichter betrieben werden. Daher ist es auch möglich, bei einer Abgabeleistung von etwa 3,8 MW einen Wechselrichter als blockierten Wechselrichter zu betreiben. Dies ist dem Graphen zu entnehmen, der durch die Quadrate symbolisiert wird. Es ist erkennbar, dass im Grunde fast proportional zur Abnahme der Abgabeleistung auch entsprechend weniger Wechselrichter als aktive Wechselrichter betrieben werden müssen.

Das rechte Diagramm erläutert die erreichbare Verbesserung des Wirkungsgrades. Entsprechend stellt das rechte Diagramm die erzielbaren Wirkungsgrade für die drei unterschiedlichen Steuerungsarten dar, die in dem linken Diagramm erläutert wurden.

Demnach ist erkennbar, dass die erste Variante 301, die immer alle Wechselrichter als aktive Wechselrichter betreibt, bei sehr geringen Abgabeleistungen einen sehr schlechten Wirkungsgrad aufweist. Zur besseren Vergleichbarkeit verwenden die Verläufe der Wirkungsgrade des rechten Diagramms dieselben Bezugszeichen wie die zugehörige Darstellung der Anzahl der aktiven Wechselrichter des rechten Diagramms.

Dadurch, dass einige Wechselrichter bei sehr geringen Abgabeleistungen als getrennte Wechselrichter betrieben werden, kann der Wirkungsgrad erhöht werden. Bei sehr geringen Abgabeleistungen ist diese Wirkungsgraderhöhung bei der zweiten und dritten Variante 302, 303 identisch.

Aber gerade bei einer Abgabeleistung etwa im ersten Drittel ist zu erkennen, dass die dritte Variante einen noch höheren Wirkungsgrad erreichen kann. Erst zu höheren Leistungen gleichen sich dann die erreichbaren Wirkungsgrade an.

Es wurde somit Folgendes erfindungsgemäß erkannt:
Umrichter von Windenergieanlagen und auch Speichersystemen (vor allem bei der Primärregelleistungserbringung) arbeiten die meiste Zeit im Teillastbereich. Das Umrichtersystem besteht aus einzelnen parallel arbeitenden Wechselrichtern, die auch als Leistungsschränke betrachtet oder bezeichnet werden können. Aus Effizienzgründen können nicht benötigte Leistungsschränke abgeschaltet werden. Aufgrund der Verzugszeit beim Einschalten und um ein zu häufiges Schalten der Netzschütze zu vermeiden, die auch als Trennschalter bezeichnet werden können, (vor allem bei turbulenten Windbedingungen), muss eine große Hysterese verwendet werden.

Aus Netzsicht ist die Abschaltung in vielen Netzen nicht gewünscht, da Windenergieanlagen im Fehlerfall den vollen Scheinstrom als Fehlerstrom in das Netz einspeisen sollten. Diese gewünschte Funktionalität kann auch als FRT mit dynamischer Netzstützung bezeichnet werden.

Die hier vorgeschlagene Lösung ermöglicht es, ein solches FRT mit dynamischer Netzstützung zu erreichen und gleichzeitig den Teillastwirkungsgrad zu verbessern, indem eine Möglichkeit entwickelt wurde, einzelne Umformer, die auch als Wechselrichter bezeichnet werden können, zwar zu deaktivieren (um den Wirkungsgrad zu erhöhen), ohne im Fehlerfall aber einen reduzierten Blindstrom hinnehmen zu müssen.

Besonders können deutliche Mehrerträge von bis zu +2,5 % Ertrag gegenüber Varianten erreicht werden, die die genannten FRT-Eigenschaften aufweisen, aber dafür alle Leistungsschränke permanent im Betrieb lassen, also immer alle Wechselrichter als aktive Wechselrichter betreiben.

Auch Mehrerträge auch gegenüber einer Variante, bei der einige Wechselrichter ganz abgeschaltet werden, sind erreichbar.

Die erfindungsgemäße Lösung kann eine Lösung schaffen, die FRT-Verhalten realisiert, ohne dadurch die Leistungskurve der Wechselrichteranordnung, insbesondere einer Windenergieanlage oder eines Speichersystems, zu verschlechtern.

Besonders wird eine Verbesserung der Leistungskurve gegenüber dem Stand der Technik geschaffen, bei dem Wechselrichter immer vom Netz getrennt werden, wenn sie nicht als aktive Wechselrichter betrieben werden.

Dadurch ergibt sich ein Potential zu Ertragssteigerung für Windparks. Eine starke Verbesserung der Leistungskurve und der Erträge ergibt sich gegenüber Anlagen, welche permanent alle Wechselrichter, die auch als Umformer bezeichnet werden können, eingeschaltet haben.

Die Idee ist, diese Ertragssteigerungen mit einer asymmetrischen Stromspeisung der einzelnen Umformer zu realisieren, demnach der Strom nicht symmetrisch auf die eingeschalteten Umformer verteilt wird.

Demgemäß trennen sich einzelne Umrichter nicht galvanisch vom Netz, sondern bleiben verbunden, aber die Pulse der Schaltungsanordnung werden gesperrt.

Durch die sehr schnelle Reaktionszeit bei der Freigabe der Pulse kann sowohl der Fehlerstrom entsprechend optimalem FRT mit dynamischer Netzstützung ausgebracht und es kann auf eine große Hysterese beim Zu- und Abschalten verzichtet werden. Die einzelnen Umformer können so in einem weiten Lastbereich im Wirkungsgradmaximum betrieben werden.

In Summe kann der Wirkungsgrad der vorgeschlagenen Lösung mit optimalem FRT mit dynamischer Netzstützung gegenüber dem Stand mit galvanischer Abschaltung sogar verbessert werden, wie in Fig. 3 gezeigt ist. Der Kreis 304 hebt die Verbesserung hervor.

Ein wichtiger Punkt der Idee ist somit, die Umrichter nicht galvanisch mittels der Netzschütze abzuschalten, sondern die Pulse der abzuschaltenden Umrichter zu blockieren. Da die Blockierung innerhalb von wenigen ms zurückgenommen und wieder eingeschaltet werden kann und kein Verschleiß irgendwo im Umformer entsteht, im Vergleich zu den Netzschützen, die durch häufiges Schalten verschleißen, können kontinuierlich immer so viele Umformer Leistung mit dem Netz austauschen, dass die Gesamtverluste minimal sind.

Die Bestimmung des optimalen Arbeitspunktes kann statisch erfolgen, indem etwa proportional Scheinstrom entsprechend viele Umrichter bzw. Wechselrichter arbeiten, also als aktive Wechselrichter arbeiten. Zusätzlich kann auch noch der Blindleistungsarbeitspunkt berücksichtigt werden, sodass die Anzahl der aktiven Umformer, also der aktiv arbeitenden Wechselrichter, vom Wirkstrom und Blindstrom abhängt, der nämlich insgesamt von der Wechselrichteranordnung erzeugt wird oder erzeugt werden soll.

Außerdem wird als weitere Variante eine modellbasierte Bestimmung des optimalen Arbeitspunktes vorgeschlagen. Dafür wird vorgeschlagen, dass optional mehr Einflussgrößen berücksichtigt werden könnten, insbesondere Temperatur, Spannung und ggf. weitere Einflussgrößen.

Als noch weitere Variante wird vorgeschlagen, dass Verluste messtechnisch erfasst werden und die Anzahl der Umformer entsprechend eines lernfähigen Algorithmus gesteuert werden.

Ergänzend kann eine Kombination aus galvanischer Abschaltung und asymmetrischer Speisung vorgesehen sein. So können zusätzlich noch die Filterströme reduziert werden. Das ist sinnvoll bei Anlagen, welche keine oder nur eine eingeschränkte dynamische Netzstützung durchführen sollen. Die schnellen Veränderungen der Wirk- und Blindströme werden dabei über die asymmetrische Speisung gefahren. Bei größeren Veränderungen der Strombelastung werden zusätzliche Umformer galvanisch zugeschaltet.

Weiterhin wurde erkannt, dass, wenn die Pulse blockiert sind, der Zwischenkreis auf Nennspannung gehalten werden muss. Dies kann durch ein temporäres Lösen der Blockierung erfolgen, das etwa im Bereich von 5 ms dauert. Auch das Erreichen einer Spannungsober- oder Untergrenze ist denkbar. Durch eine Nachladeregelung können die Rückwirkungen durch den plötzlichen Stromfluss reduziert werden. Auch eine externe Ladeschaltung wäre eine weitere Option.

Weiterhin wurde erkannt, dass, wenn einzelne Schränke aktiviert und deaktiviert werden, der Strom von der aktivierten/deaktivierten Einheit übernommen/abgegeben werden muss. Dies kann mit gesteuerten parametrierbaren Rampen erfolgen, um Rückwirkungen zu reduzieren.

Durch die asymmetrische Speisung kann es zum Anschlagen von Überwachungen (z.B. Chopper-Load aufgrund einer einfachen Überwachung ohne thermisches Modell) kommen. Dazu wird eine Überwachung der Kreisströme und Überwachung des Umladens der inaktiven Zwischenkreise vorgeschlagen.

Auch können Spannungs- und Stromgrenzen (z.B. beim Hochsetzsteller) erreicht werden. Hierfür ist eine Überwachung vorgesehen, welche die technischen Grenzen, aber auch die Schutzgrenzen berücksichtigt und ein Abschalten verhindert.

## Patentansprüche

1. Verfahren zum Einspeisen elektrischer Leistung in ein elektrisches Versorgungsnetz (250) mittels einer wechselrichtergesteuerten Einspeiseeinheit (105, 200), insbesondere einer Windenergieanlage (100) oder eines Speichersystems, wobei
- die wechselrichtergesteuerte Einspeiseeinheit (105, 200) eine Wechselrichteranordnung mit mehreren Wechselrichtern (201-203) aufweist, um eine Abgabeleistung zu erzeugen und als elektrische Leistung in das elektrische Versorgungsnetz (250) einzuspeisen,
- jedem Wechselrichter (201-203) ein Trennschalter (221-223) zugeordnet ist, um denjeweiligen Wechselrichter (201-203) galvanisch vom elektrischen Versorgungsnetz zu (250) trennen,
- jeder Wechselrichter (201-203) eine Schaltungsanordnung (260) aus Halbleiterschaltern (261, 262) aufweist, um über eine gepulste Ansteuerung der Schaltungsanordnung (260) einen möglichst sinusförmigen Ausgangsstrom zu erzeugen, und
- jeder Wechselrichter (201-203) dazu vorbereitet ist, jeweils eine variable Teilleistung zu erzeugen, und wobei
- die Abgabeleistung sich als Summe aller erzeugten Teilleistungen ergibt, wobei
- in Abhängigkeit von einer Höhe der Abgabeleistung,
- einer oder mehrere der Wechselrichter (201-203) als aktive Wechselrichter betrieben werden, wobei jeder aktive Wechselrichter jeweils eine Teilleistung erzeugt, und
- die übrigen Wechselrichter als passive Wechselrichter betrieben werden, wobei jeder passive Wechselrichter keine Teilleistung erzeugt, wobei
- einer oder mehrere der passiven Wechselrichter als blockierte Wechselrichter betrieben werden und galvanisch mit dem elektrischen Versorgungsnetz (250) verbunden bleiben.

2. Verfahren nach Anspruch 1, **dadurch gekennzeichnet, dass**
- jeder blockierte Wechselrichter dadurch keine Teilleistung erzeugt, dass die gepulste Ansteuerung unterdrückt wird, und
- jeder blockierte Wechselrichter auf ein auslösendes Signal hin verzögerungsfrei das Unterdrücken der gepulsten Ansteuerung beendet und eine Teilleistung erzeugt, und/oder
- jeder blockierte Wechselrichter (201-203) in einem Bereitschaftsmodus betrieben wird, in dem er eine volle Funktionsfähigkeit eines aktiven Wechselrichters aufweist, mit dem Unterschied, dass die gepulste Ansteuerung unterdrückt wird.

3. Verfahren nach Anspruch 1 oder 2, **dadurch gekennzeichnet, dass**
- die Windenergieanlage (100) oder das Speichersystem durch eine Maximalleistung als Obergrenze für die Abgabeleistung gekennzeichnet ist, und
- alle Wechselrichter (201-203) als aktive Wechselrichter betrieben werden und jeweils eine Teilleistung erzeugen, wenn die Abgabeleistung die Maximalleistung erreicht hat, und
- einer oder mehrere der Wechselrichter (201-203) als passive Wechselrichter betrieben werden und keine Teilleistung erzeugen, wenn die Abgabeleistung wenigstens um einen vorbestimmbaren Leistungsabstand unterhalb der Maximalleistung liegt, wobei die Maximalleistung, die Abgabeleistung und der Leistungsabstand als Scheinleistung, Wirkleistung oder Blindleistung überprüft werden können, und/oder durch Überprüfung eines Einspeisescheinstromes, Einspeisewirkstromes bzw. Einspeiseblindstromes durchgeführt werden können.

4. Verfahren nach einem der vorstehenden Ansprüche, **dadurch gekennzeichnet, dass**
- ein passiver Wechselrichter oder mehrere passive Wechselrichter als blockierte Wechselrichter betrieben werden und galvanisch mit dem elektrischen Versorgungsnetz (250) verbunden bleiben, und
- ein weiterer passiver Wechselrichter oder mehrere weitere der passiven Wechselrichter als getrennte Wechselrichter betrieben werden und jeweils durch ihre Trennschalter (221-223) galvanisch vom elektrischen Versorgungsnetz (250) getrennt werden, und optional
- für jeden Wechselrichter eine Filterschaltung (211-213) vorgesehen ist, um einen vom Wechselrichter erzeugten Ausgangsstrom zu filtern, und
- diese Filterschaltung (211-213) bei den getrennten Wechselrichtern jeweils durch den Trennschalter des betreffenden Wechselrichters auch galvanisch vom elektrischen Versorgungsnetz getrennt wird.

5. Verfahren nach einem der vorstehenden Ansprüche, **dadurch gekennzeichnet, dass**
- eine Auswahl der Wechselrichter als aktive Wechselrichter oder als passive Wechselrichter und/oder
- eine Auswahl der passiven Wechselrichter als blockierte Wechselrichter oder getrennte Wechselrichter,
- in Abhängigkeit von einer Größe eines einzuspeisenden Scheinstroms,
- in Abhängigkeit von einer Größe eines einzuspeisenden Wirkstroms,
- in Abhängigkeit von einer Größe eines einzuspeisenden Blindstroms,
- in Abhängigkeit von wenigstens einem erfassten Verlust der Wechselrichteranordnung,
- in Abhängigkeit von einer erfassten Temperatur der Wechselrichteranordnung,
- in Abhängigkeit von einer Zwischenkreisspannung eines gemeinsamen Gleichspannungszwischenkreises der Wechselrichteranordnung,
- in Abhängigkeit von einer Netzspannung des elektrischen Versorgungsnetzes (250), und/oder
- in Abhängigkeit von einer Schwankungsbreite der Abgabeleistung erfolgt.

6. Verfahren nach einem der vorstehenden Ansprüche, **dadurch gekennzeichnet, dass**
- ein Verhalten der Wechselrichteranordnung über ein Modell modelliert wird und
- eine Auswahl der Wechselrichter (201-203) als aktive Wechselrichter oder als passive Wechselrichter und optional
- eine Auswahl der passiven Wechselrichter als blockierte Wechselrichter oder getrennte Wechselrichter in Abhängigkeit von
- einem Verhalten des Modells erfolgt.

7. Verfahren nach einem der vorstehenden Ansprüche, **dadurch gekennzeichnet, dass**
- ein Verhalten der Wechselrichteranordnung über ein bzw. das Modell modelliert wird und
- das Modell mit einer Testkonfiguration simuliert wird, wobei
- die Testkonfiguration durch eine Auswahl der Wechselrichter als aktive Wechselrichter oder als passive Wechselrichter vorgegeben wird, und optional
- die Testkonfiguration zusätzlich durch eine Auswahl der passiven Wechselrichter als blockierte Wechselrichter oder als getrennte Wechselrichter vorgegeben wird,
- die Testkonfigurationen variiert werden und das Modell für jede Testkonfiguration simuliert wird, um zu jeder Testkonfiguration ein Simulationsergebnis zu erhalten, wobei
- in Abhängigkeit von den Simulationsergebnissen eine neue Konfiguration ausgewählt wird, insbesondere unter Bewertung von Randbedingungen.

8. Verfahren nach einem der vorstehenden Ansprüche, **dadurch gekennzeichnet, dass**
- für eine Höhe der Abgabeleistung eine Auswahl der Wechselrichter als aktive Wechselrichter oder als passive Wechselrichter getroffen wird,
- mit der getroffenen Auswahl die Einspeiseeinrichtung betrieben wird, oder ein bzw. das Modell simuliert wird,
- ein Wirkungsgradmaß als Ergebnis des Betriebs bzw. der Simulation erfasst wird, und
- die Auswahl zusammen mit der Höhe der Abgabeleistung und dem Wirkungsgradmaß als Referenzkonfiguration abgespeichert wird, optional zusammen mit wenigstens einer Eigenschaft oder Randbedingung, und
- nach einer Veränderung der Höhe der Abgabeleistung eine Auswahl der Wechselrichter als aktive Wechselrichter oder als passive Wechselrichter in Abhängigkeit von wenigstens einer Referenzkonfiguration getroffen wird.

9. Verfahren nach einem der vorstehenden Ansprüche, **dadurch gekennzeichnet, dass**
- von den Wechselrichtern jeweils eine Wechselrichtertemperatur erfasst wird, insbesondere jeweils als Temperatur der Schaltungsanordnung (260) des jeweiligen Wechselrichters,
- eine konkrete Auswahl, welcher Wechselrichter als aktiver Wechselrichter und welcher als passiver Wechselrichter betrieben wird,
- in Abhängigkeit von den Wechselrichtertemperaturen getroffen wird, insbesondere, dass
- die konkrete Auswahl in Abhängigkeit eines Vergleichs der Wechselrichtertemperaturen getroffen wird, und dass
- optional in Abhängigkeit der Wechselrichtertemperaturen die konkrete Auswahl verändert wird.

10. Verfahren nach einem der vorstehenden Ansprüche, **dadurch gekennzeichnet, dass**
- jeder Wechselrichter (201-203) einen Gleichspannungszwischenkreis mit einer Zwischenkreisspannung aufweist und
- für die blockierten Wechselrichter eine Zwischenkreissteuerung vorgesehen ist, die die Zwischenkreisspannung in einem Spannungsband hält.

11. Verfahren nach einem der vorstehenden Ansprüche, **dadurch gekennzeichnet, dass**
- bei einem Wechsel eines aktiven Wechselrichters in einen passiven Wechselrichter die von dem aktiven Wechselrichter vor dem Wechsel erzeugte Teilleistung auf die verbleibenden aktiven Wechselrichter zur Erzeugung verteilt wird, wobei
- zum Verteilen eine Übergangsvorschrift vorgesehen ist und
- die Übergangsvorschrift einen zeitlichen Verringerungsverlauf zum Verringern der Teilleistung des wechselnden aktiven Wechselrichters vorgibt, und/oder
- die Übergangsvorschrift jeweils einen zeitlichen Erhöhungsverlauf zum Erhöhen der Teilleistungen der verbleibenden aktiven Wechselrichter vorgibt, wobei insbesondere
- der Verringerungsverlauf und/oder der Erhöhungsverlauf jeweils als in einer Steigung parametrierbare Rampen ausgebildet sind.

12. Verfahren nach einem der vorstehenden Ansprüche, **dadurch gekennzeichnet, dass**
- zum Steuern der Wechselrichteranordnung eine zentrale Steuerung vorgesehen ist und
- die zentrale Steuerung Auswirkungen durch ein Auswählen der aktiven, passiven, blockierten und/oder getrennten Wechselrichter auf Betriebszustände der Wechselrichteranordnung überwacht, wobei die Überwachung insbesondere
- eine Reaktion eines Chopperkreises überwacht,
- ein Auftreten von Kreisströmen überwacht wird, und/oder
- ein Erreichen von Stromgrenzen überwacht wird, und/oder wobei optional
- in Abhängigkeit von einem Ergebnis der Überwachung die Steuerung der Wechselrichteranordnung verändert wird.

13. Verfahren nach einem der vorstehenden Ansprüche, **dadurch gekennzeichnet, dass**
- eine zu erwartende Leistungsänderung der Abgabeleistung prognostiziert oder vorgegeben wird und
- in Abhängigkeit von der zu erwartenden Leistungsänderung
- passive Wechselrichter als blockierte oder getrennt Wechselrichter betrieben werden, insbesondere so, dass
- die zu erwartende Leistungsänderung in einen Anteil schneller Leistungsänderungen und einen Anteil langsamer Leistungsänderung unterteilt wird und
- umso mehr passive Wechselrichter als blockierte Wechselrichter betrieben werden, je größer der Anteil prognostizierter schneller Leistungsänderungen ist und/oder
- ein Anteil blockierter Wechselrichter an passiven Wechselrichtern
- im Bereich von 90%-100% liegt, wenn die Änderung der Leistung dem Betrag nach größer als 20% einer Nennleistung der Wechselrichteranordnung pro Sekunde beträgt.

14. Wechselrichtergesteuerte Einspeiseeinheit, insbesondere Windenergieanlage (100) oder ein Speichersystem, zum Einspeisen elektrischer Leistung in ein elektrisches Versorgungsnetz (250), umfassend
- eine Wechselrichteranordnung mit mehreren Wechselrichtern, zum Erzeugen einer Abgabeleistung und zum Einspeisen der Abgabeleistung als elektrische Leistung in das elektrische Versorgungsnetz (250), wobei
- jedem Wechselrichter ein Trennschalter zugeordnet ist, um den jeweiligen Wechselrichter galvanisch vom elektrischen Versorgungsnetz (250) zu trennen,
- jeder Wechselrichter eine Schaltungsanordnung (260) aus Halbleiterschaltern (261, 262) aufweist, um über eine gepulste Ansteuerung der Schaltungsanordnung (260) einen möglichst sinusförmigen Ausgangsstrom zu erzeugen, und
- jeder Wechselrichter dazu vorbereitet ist, jeweils eine variable Teilleistung zu erzeugen, und wobei
- die Wechselrichteranordnung so verschaltet ist, dass sich die Abgabeleistung als Summe aller erzeugten Teilleistungen ergibt, wobei
- eine zentrale Steuereinheit (270) zum Steuern der Wechselrichteranordnung vorgesehen ist und die zentrale Steuereinheit (270) dazu vorbereitet ist, die Wechselrichteranordnung so zu steuern, dass
- in Abhängigkeit von einer Höhe der Abgabeleistung,
- einer oder mehrere der Wechselrichter als aktive Wechselrichter betrieben werden, wobei jeder aktive Wechselrichter jeweils eine Teilleistung erzeugt, und
- die übrigen Wechselrichter als passive Wechselrichter betrieben werden, wobei jeder passive Wechselrichter keine Teilleistung erzeugt, wobei
- einer oder mehrere der passiven Wechselrichter als blockierte Wechselrichter betrieben werden und galvanisch mit dem elektrischen Versorgungsnetz (250) verbunden bleiben.

15. Einspeiseeinheit nach Anspruch 14, **dadurch gekennzeichnet, dass** die Einspeiseeinheit (105, 200), insbesondere die zentrale Steuereinheit (270), dazu vorbereitet ist, ein Verfahren nach einem der Ansprüche 1 bis 13 auszuführen.
